# EUROPÄISCHE PATENTSCHRIFT

(11) **EP 0 587 690 B1**
(45) Veröffentlichungstag und Bekanntmachung des Hinweises auf die Patenterteilung: **06.12.1995**
(21) Anmeldenummer: 92911796.8
(22) Anmeldetag: 05.06.1992
(51) Int. Cl.: F16K 1/44

(54) **VERFAHREN ZUR REINIGUNG EINES DOPPELSITZVENTILS UND VENTILVORRICHTUNG ZUM DURCHFÜHREN DES VERFAHRENS**
PROCESS FOR CLEANING A DOUBLE SEAT VALVE AND VALVE DEVICE FOR CARRYING OUT THE PROCESS
PROCEDE DE NETTOYAGE DE SOUPAPES A DOUBLE SIEGE ET DISPOSITIF A SOUPAPE POUR LA MISE EN OEUVRE DU PROCEDE

(30) Priorität: 07.06.1991 DE 4118874
(43) Veröffentlichungstag der Anmeldung: 23.03.1994
(73) Patentinhaber: OTTO TUCHENHAGEN GmbH & Co. KG, 21514 Büchen (DE)
(72) Erfinder: MIETH, Hans, Otto, D-2058 Schnakenbek (DE)
(74) Vertreter: Glaeser, Joachim, Dipl.-Ing.
(86) Internationale Anmeldenummer: EP9201275
(87) Internationale Veröffentlichungsnummer: WO9221900

(56) Entgegenhaltungen:
- EP-A- 0 039 319
- DE-C- 3 701 027
- DK-B- 158 111

## Beschreibung

Die Erfindung betrifft ein Verfahren zur Reinigung eines Doppelsitzventils nach dem Oberbegriff des Anspruchs 1 und eine Ventilvorrichtung zum Durchführen des Verfahrens nach dem Oberbegriff des Anspruchs 12 oder 13.

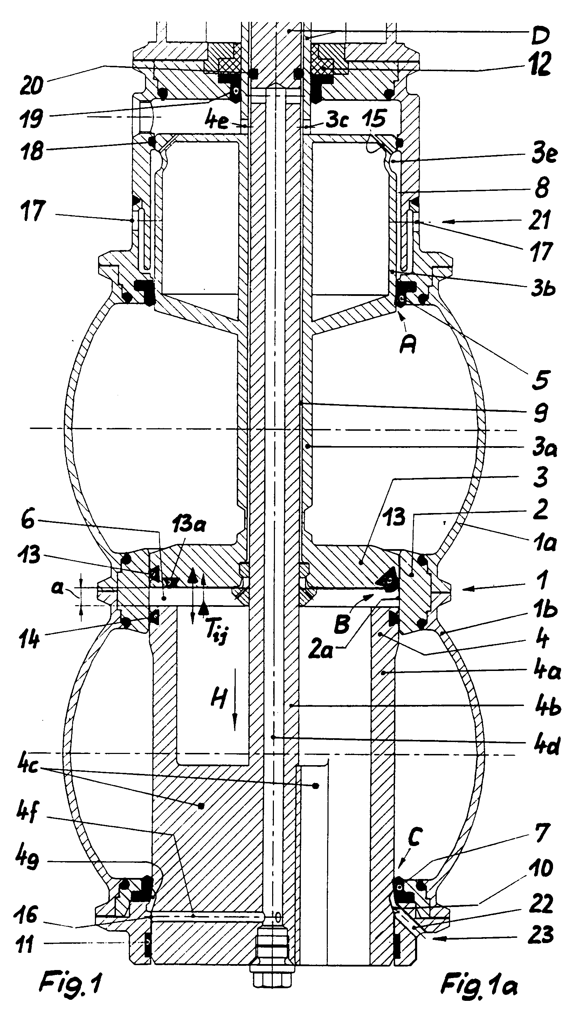

Ein Verfahren der einleitend gekennzeichneten Gattung ist aus der DE 31 08 778 C2 bekannt. Dieses Verfahren löst die Aufgabe, bei einem Ventil der in Rede stehenden Art beide Sitzflächen der Schließglieder gleichzeitig zu reinigen. Dabei wird das Reinigungs- und/oder Desinfektionsmittel entweder von außerhalb des Doppelsitzventils über den Leckagehohlraum oder über ein Ventilgehäuseteil an die beiden freigelegten Sitzflächen herangeführt (vgl. Figuren 1 bis 5a der Zeichnung).

In der EP-A-0 208 126 ist das aus der DE 31 08 778 C2 bekannte Verfahren derart weiterentwickelt, daß bei einem mit einem Schieber und einem Sitzteller ausgestatteten Doppelsitzventil zum Zwecke der Sitzreinigung des schieberartig ausgebildeten Schließgliedes dieses in Richtung des zugeordneten Ventilgehäuseteils allein verschiebbar ist, während der Sitzteller auf seiner Sitzfläche verbleibt und das Reinigungsmittel von außerhalb des Doppelsitzventils über den Leckagehohlraum an die freigelegte Sitzfläche herangeführt wird. Dieses wie auch das ältere Verfahren leisten einen Beitrag zur Reinigung eines relevanten Doppelsitzventil-Bereichs, nämlich des Sitzbereichs. Die Praxis fordert jedoch, auch die anderen relevanten Bereiche, jene der Stangendurchführungen durch die zugeordneten Ventilgehäuseteile, in die Reinigungsprozedur mit einzubeziehen.

Bei Ventilen mit schieberartig ausgebildeten Schließgliedern ist es erforderlich, besondere Vorkehrungen zu treffen, damit die vom Fluid in den Leitungen auf die Schließglieder ausgeübten Druckkräfte aufgenommen werden können. Diese Kräfte können entweder über geeignete Maßnahmen im Ventilantrieb oder aber durch druckausgleichende Maßnahmen am Schließglied im Bereich des Ventilgehäuses (vgl. EP-A-00 39 319, Figur 1; EP-A-0 208 126, Fig. 3.2) kompensiert werden. Die erstgenannte Maßnahme führt zu relativ großdimensionierten Antrieben, während die druckausgleichenden Vorkehrungen am Schließglied naturgemäß große Stangendurchführungen erfordern, die schon allein aufgrund ihrer großen Dichtungslängen hinsichtlich ihrer Reinigungsfähigkeit und ihrer Sicherheit im Hinblick auf die Vermischung von Produkt und Reinigungsflüssigkeit problematisch sind.

Aus der EP-A-00 39 319 ist bekannt, zwischen den Dichtungen des Druckausgleichskolbens eine Kammer anzuordnen, die mittels Reinigungsmittel spülbar ist. Um einen ausreichenden Reinigungsmitteldurchsatz sicherzustellen, muß ein hinreichend großer statischer Druck an der Einleitungsstelle des Reinigungsmittels vorliegen. Aus Sicherheitsgründen wird jedoch allgemein angestrebt, daß das Reinigungsmittel an der dem Innenraum des Ventilgehäuseteils zugewandten Stangenabdichtung möglichst drucklos ansteht. In jedem Falle ist jedoch in bestimmten Zeitabständen dafür Sorge zu tragen, daß der Bereich hinter der Dichtung mit ihrer relativ großen Umfangslänge, in den gegebenenfalls aufgrund der Schaltbewegung des Ventils Produkt verschleppt werden kann, und die Kontaktflächen zwischen Dichtung und Stange mit Reinigungsmittel beaufschlagbar bzw. benetzbar sind. In der DE 37 01 027 A1 wird gezeigt (vgl. Figuren 7 und 8), wie zwei seriell angeordnete, gehäuseseitig bestimmte Abdichtungsstellen, die mit einem schieberartig ausgebildeten Schließglied zusammenwirken und deren Zwischenraum spülbar ist, jeweils im Bereich einer dieser Abdichtungsstellen gereinigt werden können, ohne daß der gesamte Sitzbereich des Schließgliedes freigelegt werden muß. Während die vorstehend zitierten Figuren eine einstückige Dichtung mit zwei Abdichtungsstellen zeigen, sind der Beschreibungseinleitung und den Ansprüchen auch Dichtungsanordnungen zu entnehmen, die aus zwei separaten Dichtungen bestehen. Die getrennte Reinigung von zwei im Abstand angeordneten, gehäuseseitigen Dichtungen im Zusammenwirken mit einem schieberartig ausgebildeten Schließglied bzw. einer aus einem Ventilgehäuse herausgeführten Stange durch Teilverschiebung des Schließgliedes bzw. der Stange mit dem Ziel eines Freilegens der einen oder der anderen Dichtung zu jenem Ventilgehäuseteil, in dem Reinigungsmittel ansteht, ist in der die Priorität der vorgenannten DE 37 01 027 A1 beanspruchenden Druckschrift WO 88/05512 näher verdeutlicht (vgl. z.B. die Figuren 21,22; 25,26 und 59, 60).

Aus der Druckschrift DE-U-88 13 258 ist schließlich zu entnehmen, wie ein Doppelsitzventil, welches ein als Sitzteller und ein als Schieber ausgebildetes Schließglied aufweist und bei dem die Druckkräfte auf den Schieber durch einen an diesem ausgebildeten Druckausgleichskolben kompensiert werden, im Bereich der Sitzfläche des Schiebers und im Bereich der Durchführung des Druckausgleichkolbens durch das Ventilgehäuseteil mit den aus den vorstehend zitierten Druckschriften als bekannt nachgewiesenen Lösungsmerkmalen einer Reinigung unterzogen werden kann. Man erkennt, daß aus dem untenliegenden Ventilgehäuseteil zwei parallele Reinigungsströme (r1, r2) abgezweigt werden, wobei der eine durch die freigelegte Sitzfläche des schieberartig ausgebildeten Schließgliedes über den Leckagehohlraum und ein nach unten aus dem Ventilgehäuseteil herausgeführtes Rohr seinen Weg in die Umgebung des Ventils nimmt (r1), während der andere Strom (r2) über die freigelegte Durchführung des Druckausgleichskolbens aus dem Ventilgehäuseteil in die Umgebung des Ventils austritt.

Diese bekannte Lösung weist mehrere Nachteile auf. Zum einen ist der durch die freigelegte Sitzfläche des schieberartig ausgebildeten Schließgliedes hindurchtretende Reinigungsmittelstrom (r1) nur schwer zu bemessen, so daß eine unkontrollierte Vergeudung von Reinigungsmittel und eine damit verbundene Umweltbelastung nicht auszuschließen sind, zum anderen ist ein zweiter paralleler Reinigungsmittelstrom (r2) notwendig, um einen weiteren kritischen Bereich des Doppelsitzventils, den Durchführungsbereich des Druckausgleichskolbens des einen Schließgliedes, zu reinigen. Darüber hinaus bleiben andere ebenso wichtige kritische Bereiche des Doppelsitzventils ungereinigt. Diese Bereiche sind unter bestimmten Bedingungen die Sitzfläche des als Sitzteller ausgebildeten und gegebenenfalls produktbeaufschlagten Schließgliedes, in jedem Falle die Durchführung seiner Betätigungsstange durch das obenliegende Ventilgehäuseteil und der Dichtungsbereich zwischen der Betätigungsstange des schieberartig ausgebildeten Schließgliedes und der diese Stange umschließenden Hohlstange des Sitztellers.

Ausgehend von den vorgenannten Nachteilen und Erfordernissen des Standes der Technik liegt der vorliegenden Erfindung die Aufgabe zugrunde, ein Verfahren der einleitend gekennzeichneten Gattung zu schaffen, das die Reinigung der relevanten Bereiche eines Doppelsitzventils mit minimalem, ökonomischem und nicht zuletzt umweltschonendem Einsatz von Reinigungs- und/oder Desinfektionsmittel sicherstellt.

Diese Aufgabe wird durch die Merkmale nach Anspruch 1 gelöst. Vorteilhafte Ausgestaltung des Verfahrens sind Gegenstand der Ansprüche 2 bis 7. Eine Ventilvorrichtung zum Durchführen des vorgeschlagenen Verfahrens wird durch Anwendung der Merkmale nach Anspruch 12 oder 13 erreicht, während vorteilhafte Ausführungsformen der Ventilvorrichtung Gegenstand der weiteren Unteransprüche sind.

Mit dem vorgeschlagenen Verfahren wird erreicht, daß mit einem einzigen Reinigungsmittelstrom, der mit der Teilhubbewegung eines schieberartig ausgebildeten Schließgliedes an dessen Stangendurchführung aus dem zugeordneten Ventilgehäuseteil gewonnen wird, eine Reinigung der relevanten Bereiche des Doppelsitzventils möglich ist. Durch den Teilhub wird die Durchführung (A oder C) der Betätigungsstange des Schließgliedes zum Ventilgehäuseteil freigelegt, so daß der Reinigungsmittelstrom dort hindurchtreten kann, um die Durchführung der Betätigungsstange an der Abzweigungsstelle, und mindestens einen der folgenden Bereiche, die andere Stangendurchführung, den Leckagehohlraum und den zugänglich gemachten Sitzbereich zu reinigen.

Das vorgeschlagene Verfahren ist in einer ersten Ausgestaltung dann besonders vorteilhaft anwendbar, wenn die beiden Ventilgehäuseteile im wesentlichen senkrecht übereinander angeordnet sind und das Reinigungsmittel im oberen Ventilgehäuseteil zur Verfügung steht. In diesem Falle reinigt der Reinigungsmittelstrom ohne weitere Verzweigung nacheinander, in beliebiger Reihenfolge, vorzugsweise in der Weiterführung von oben nach unten, mindestens einen der vorgenannten relevanten Bereiche des Doppelsitzventils. Da er dem zugänglich gemachten Sitzbereich im wesentlichen als Spritzstrahl und den beiden anderen nachgeordneten Bereichen quasi als Rieselfilm unter dem Einfluß der Schwerkraft zugeführt wird, können sich bei diesem Verlauf keinerlei nachteilige Druckerhöhungen im Reinigungsmittel ergeben; allerdings bleibt diese vorteilhafte Verfahrensvariante von der Ventillage abhängig und somit auf eine bestimmte, wenn auch relativ große Zahl von Anwendungsfällen beschränkt.

Kann, wie dies das vorgeschlagene Verfahren alternativ ebenso beinhaltet, der Reinigungsmittelstrom nur an der anderen Stangendurchführung (C), der untenliegenden, gewonnen werden, wobei mindestens die obere Stangendurchführung (A) gereinigt und anschließend, in der Weiterführung von oben nach unten, der Reinigungsmittelstrom in den zugänglich gemachten Sitzbereich bzw. den Leckagehohlraum weitergeführt wird, dann ist es erforderlich, daß er an der Stangendurchführung (A) unter einem hinreichend hohen Druck zur Verfügung steht, damit eine ausreichend wirksame Reinigung in den nachgeschalteten Bereichen sichergestellt ist. Diesem prinzipiellen Nachteil (Druck an der Stangendurchführung) steht der generell mit der Reihenschaltung der zu reinigenden Bereiche erzielbare Vorteil gegenüber, daß derselbe Reinigungsmittelstrom alle Bereiche reinigt, so daß das mit der Erfindung verfolgte Ziel am effektivsten erreicht wird.

Eine weitere vorteilhafte Ausgestaltung des vorgeschlagenen Verfahrens erlaubt es, das Doppelsitzventil (im folgenden auch kurz mit Ventil bezeichnet) lageunabhängig einzusetzen, wobei der Reinigungsmittelstrom sowohl aus dem einen als auch aus dem anderen Ventilgehäuseteil gewonnen werden kann, ohne daß damit der Nachteil des letztgenannten Verfahrens hinzunehmen ist. Dies wird dadurch erreicht, daß sich der Reinigungsmittelstrom hinter der Durchführung der Stange an der Abzweigungsstelle in Teilströme Ri verzweigt, die die relevanten Bereiche des Doppelsitzventils, die nebeneinander oder neben- und hintereinander geschaltet sein können, reinigen. Dabei werden der Gesamtstrom R und seine Teilströme Ri als erzwungene Strömung bis in die zu reinigenden Bereiche geführt, wobei stets sichergestellt werden kann, daß die jeweils kritische Stangendurchführung Endpunkt und nicht Zwischenstation für einen Teilstrom ist.

In den meisten Anwendungsfällen genügt, wie dies eine weitere Ausgestaltung des vorgeschlagenen Verfahrens vorsieht, eine Verzweigung des Gesamtstromes R in zwei Teilströme R1 und R2, von denen der eine (R1) den zugänglich gemachten Sitzbereich und den Leckagehohlraum und der andere (R2) die andere Stangendurchführung (C) bzw. (A) reinigt.

Eine definierte Einstellung und Bemessung der Teilstrommengen bzw. des Verhältnisses der Teilstrommengen zueinander ist möglich. Im Regelfalle ist zur Reinigung des zugänglich gemachten Sitzbereichs und des Leckagehohlraums des Ventils ein mehrfaches an Reinigungsmittel notwendig als für die Reinigung einer Stangendurchführung. Aus diesem Grunde ist es angezeigt, das Verhältnis dieser Teilströme, beispielsweise der Teilströme R1 und R2, mit R1/R2 > 1 einzustellen.

Das vorgeschlagene Verfahren ist sowohl für Doppelsitzventile mit zwei schieberartig ausgebildeten Schließgliedern als auch für Doppelsitzventile mit einem schieberartig ausgebildeten Schließglied und einem Sitzteller anwendbar. Bei der letztgenannten Schließglied-Konfiguration verbleibt der Sitzteller auf seiner Sitzfläche und das schieberartig ausgebildete Schließglied wird um den Teilhub von ihm entfernt. Die Sitzfläche des Sitztellers wird daher im Zuge der Anwendung der vorgeschlagenen Verfahren nicht gereinigt.

Sofern im Doppelsitzventil zwei schieberartig ausgebildete Schließglieder vorgesehen sind, schlägt die Erfindung verfahrensmäßig zwei Teilhubvarianten vor. Die eine Variante zeichnet sich dadurch aus, daß die Schließglieder um gegensinnige Teilhübe verschoben werden, wobei der Reinigungsmittelstrom an der Stangendurchführung jenes Schließgliedes abgezweigt wird, dessen Teilhub entgegen der Öffnungsrichtung des Ventils verläuft. Bei der anderen Variante werden die Schließglieder um gleichsinnige Teilhübe verschoben, wobei der Reinigungsmittelstrom an der Stangendurchführung jenes Schließgliedes abgezweigt wird, dessen Teilhub entgegen der Öffnungsrichtung des Ventils verläuft und das abhängig angetrieben ist.

Mit einem geeigneten Stellantrieb gelingt es, die beiden vorgenannten Teilhubvarianten an derselben Ventilvorrichtung zu realisieren, so daß es nunmehr möglich ist, die mit der vorliegenden Erfindung in ihrer ganzen Breite erzielbaren Vorteile in jedem Falle an demselben Ventil sicherzustellen, gleichgültig ob das Reinigungsmittel in dem einen oder dem anderen Ventilgehäuseteil zur Verfügung steht. Für den Fall, daß beispielsweise das Ventil nach unten öffnet und Reinigungsmittel im oberen Ventilgehäuseteil ansteht, während das untere Ventilgehäuseteil gegebenenfalls mit Produkt beaufschlagt ist, wird über eine gegensinnige Teilhubbewegung die Bereitstellung des Reinigungsmittelstromes über die obere Stangendurchführung erreicht. Falls bei demselben Ventil das Reinigungsmittel im unteren Ventilgehäuseteil ansteht, kann durch gleichsinnige Teilhubbewegung entgegen der Öffnungsrichtung des Ventils die untere Stangendurchführung freigelegt werden, so daß der Reinigungsmittelstrom nunmehr aus dem unteren Ventilgehäuseteil abgezweigt werden kann. Das obere Ventilgehäuseteil kann dabei gegebenenfalls produktbeaufschlagt sein. Beide Teilhubvarianten ermöglichen eine Verschiebung des ggf. produktbeaufschlagten Schließgliedes in Richtung des produktführenden Ventilgehäuseteils, wodurch der vormals produktbeaufschlagte, vom Schließglied abgedeckte Sitzbereich aus dem Leckagehohlraum heraus für den Reinigungsmittelstrom zugänglich gemacht wird.

Nicht in allen in der Praxis vorkommenden Fällen steht Reinigungsmittel in wenigstens einem der Ventilgehäuseteile zur Verfügung, so daß das vorstehend vorgeschlagene Verfahren nicht zur Anwendung gelangen kann. Darüber hinaus ist das eingangs vorgeschlagene Verfahren dann nicht anwendbar, wenn in beiden Ventilgehäuseteilen Produkt ansteht, eine Reinigung der relevanten Bereiche des Doppelsitzventils uneingeschränkt sowohl in dessen Schließ- als auch in eingeschränkter Form in dessen Offenstellung, nämlich eine Reinigung aller Bereiche mit Ausnahme der freigemachten Sitzflächen, erforderlich ist.

Aus der bereits einleitend genannten EP-A-0 208 126 ist bekannt, bei Vorliegen der vorstehend genannten Betriebsbedingungen durch Heranführen des Reinigungsmittels von außerhalb des Doppelsitzventils über den Leckagehohlraum die alleinige Reinigung der Sitzfläche des ggf. produktbeaufschlagten, schieberartig ausgebildeten Schließgliedes durchzuführen. Eine Reinigung der Stangendurchführungen ebenfalls durch Heranführen von Reinigungsmittel von außerhalb und unter relativ hohem Druck, wie es einer intensiven Reinigung förderlich wäre, ist prinzipiell zwar immer möglich; sie verbietet sich jedoch aus sicherheitstechnischen Gründen, da bereits konzeptionell verhindert werden muß, daß eine einerseits produktbeaufschlagte Stangendichtung andererseits von einem unter Druck stehenden Reinigungsmittel beaufschlagt wird.

Um eine Beaufschlagung der ggf. produktbeaufschlagten Stangendichtung mit Reinigungsmittel überhaupt sicherzustellen, hat man vorgeschlagen, letzteres möglichst drucklos dem unmittelbaren Dichtungsbereich zuzuführen. Es versteht sich von selbst, daß ein unter derartigen Druckbedingungen anfallendes Reinigungsmittel für keine weitere Reinigungsaufgabe im Doppelsitzventil Verwendung finden kann. Damit entfallen bei derartigen reinigungstechnischen Lösungen von vornherein die Voraussetzungen für eine Reinigung der relevanten Bereiche eines Doppelsitzventils mit minimalem, ökonomischem und nicht zuletzt umweltschonendem Einsatz von Reinigungs- und/oder Desinfektionsmittel, die darin bestehen, daß derselbe Reinigungsmittelstrom alle reinigungstechnisch relevanten Bereiche des Doppelsitzventils reinigt.

Ausgehend von den eben dargestellten Nachteilen und Erfordernissen des Standes der Technik ist es auch Ziel der vorliegenden Erfindung, ein Verfahren der einleitend genannten Art zu schaffen, welches bei Bereitstellung des Reinigungsmittels aus der Umgebung des Doppelsitzventils die eingangs gestellte und uneingeschränkt gültige Aufgabe löst, nämlich die Reinigung der relevanten. Bereiche eines Doppelsitzventils mit minimalem, ökonomischem und nicht zuletzt umweltschonendem Einsatz von Reinigungs- und/oder Desinfektionsmittel sicherzustellen.

Die Aufgabe wird durch die Merkmale nach Anspruch 8 gelöst. Vorteilhafte Ausgestaltungen des Verfahrens sind Gegenstand der Ansprüche 9 bis 11. Eine Ventilvorrichtung zum Durchführen des vorgeschlagenen Verfahrens gemäß den Ansprüchen 8 bis 11 wird durch Anwendung der Merkmale nach Anspruch 21 erreicht.

Mit dem nunmehr vorgeschlagenen Verfahren sind für Doppelsitzventile, bei denen das Reinigungsmittel aus der Umgebung des Ventils herangeführt werden muß, da im Ventilgehäuse kein Reinigungsmittel verfügbar ist oder betriebsbedingt Produkt ansteht, die gleichen Vorteile erreichbar, wie bei jenen Doppelsitzventilen, bei denen durch Teilhub eines Schließgliedes und der damit verbundenen Freilegung einer Stangendurchführung die Reinigungsmittelquelle "Ventilgehäuse" zur Verfügung steht. Die beiden alternativ vorgeschlagenen Verfahren unterscheiden sich lediglich durch die Lage bzw. Art der Reinigungsmittelquelle. Beim nunmehr vorgeschlagenen Verfahren wird der Reinigungsmittelstrom von außerhalb des Doppelsitzventils über eine Einleitungsstelle (E) in letzteres eingeleitet, wo er die Durchführung (A oder C) der Stange auf der Ventilgehäuseseite der Einleitungsstelle und, mindestens einen der folgenden Bereiche, die andere Stangendurchführung (C bzw. A), den Leckagehohlraum und den Sitzbereich bzw. den zugänglich gemachten Sitzbereich, reinigt.

Da ein Teilhub wenigstens eines Schließgliedes wegen der nicht mehr bestehenden Notwendigkeit, die Stangendurchführung zum Ventilgehäuseteil freizulegen, entfallen kann, wird der Antrieb eines derart zu reinigenden Doppelsitzventils besonders einfach. Allerdings sind die vorstehend verfahrensmäßig vorgeschlagenen Teilhubvarianten uneingeschränkt auch in Verbindung mit nunmehr vorgeschlagenen Reinigungsverfahren anwendbar. Das gleiche gilt für den vorgeschlagenen grundsätzlichen Aufbau der Ventilvorrichtung und ihrer vorteilhaften Ausgestaltungen.

Daß das nunmehr vorgeschlagene Verfahren die Vorteile des eingangs vorgeschlagenen Verfahrens nahezu uneingeschränkt nutzen kann, liegt nicht zuletzt daran, daß es auf einer vorteilhaften Verfahrensvariante des eingangs vorgeschlagenen Verfahrens basiert, die unter anderem darin besteht, daß sich der im Ventil gewonnene bzw. der nunmehr aus der Umgebung des Ventils eingeleitete Reinigungsmittelstrom an einer Verzweigungsstelle (V) in Teilströme Ri verzweigt, wobei zwischen der Verzweigungsstelle und der benachbarten Stangendichtung ein Drosselspalt vorgesehen ist. Im Drosselspalt wird ein Teilstrom (r) gedrosselt, reinigt nahezu drucklos die Stangendichtung und wird anschließend in die Umgebung des Ventils abgeführt. Der andere Teilstrom (R) bzw. die Teilströme (R1, R2) werden von der Verzweigungsstelle ungedrosselt fortgeleitet und reinigen die anderen relevanten Bereiche des Ventils, und zwar im wesentlichen nach einem der vorteilhaften Ausgestaltungen des eingangs vorgeschlagenen Verfahrens.

Eine nahezu baugleiche Ausgestaltung der Ventilvorrichtung zur Durchführung des nunmehr vorgeschlagenen Verfahrens im Bereich der Stangendurchführung gelingt durch die Verwendung eines baugleichen Einsatzes zwischen dem Gehäuse und dem Druckausgleichskolben bzw. dem Rohr. Dieser Einsatz bildet zum einen jeweils den notwendigen Drosselspalt mit dem Druckausgleichskolben bzw. dem Rohr und er beinhaltet zum anderen jeweils eine Ablaufbohrung zur Ableitung des Teilstromes (r) aus einer an die Stangendichtung angrenzenden und von dem Einsatz teilweise gebildeten Kammer in die Umgebung des Ventils.

Die Ventilvorrichtung zum Durchführen des eingangs vorgeschlagenen Verfahrens findet ihre besonders vorteilhafte Ausprägung dann, wenn beide Schließglieder schieberartig ausgebildet sind und die Öffnungsrichtung des Ventils von oben nach unten verläuft.In diesem Fall wird die Abzweigung des Reinigungsmittels an der oberen Stangendurchführung (A) durch einen gegen die Öffnungsbewegung des Ventils gerichteten Teilhub des obenliegenden Schiebers erreicht. Gleichzeitig wird dabei das untenliegende schieberartig ausgebildete Schließglied um einen gegensinnigen Teilhub nach unten verschoben, so daß nunmehr beide Sitzflächen, nach wie vor in der Schließstellung des Ventils, freigelegt sind. Das aus dem oberen Ventilgehäuseteil abgezweigte Reinigungsmittel reinigt zunächst die obere Stangendurchführung, gelangt anschließend in den zugänglich gemachten Sitzbereich und den angrenzenden Leckagehohlraum des Ventils, um schließlich innerhalb des nach unten sich erstreckenden Rohres als Rieselfilm der unteren Stangendurchführung zuzulaufen und von dort in die Umgebung des Ventils auszutreten.

Die Ventilvorrichtung zur Durchführung des vorgeschlagenen Verfahrens mit der Verzweigung des Gesamtstromes R in zwei Teilströme R1 und R2 zeichnet sich u.a. dadurch aus, daß der an der oberen Stangendurchführung (A) oder alternativ der unteren Stangendurchführung (C) gewonnene Reinigungsmittelstrom R zunächst einer Verzweigungsstelle zugeführt wird, von wo aus er sich in die Teilströme R1 und R2 verzweigt. Der Teilstrom R1 gelangt über eine Verbindung der Verzweigungsstelle mit dem Ringspalt in den Leckagehohlraum des Ventils, während der Teilstrom R2 von der Verzweigungsstelle aus einer in der innenliegenden Betätigungsstange in axialer Richtung angeordneten Bohrung zugeführt und von dort zur anderen Stangendurchführung (C) bzw. an die Stangendurchführung (A) weitergeleitet wird.

Die Ventilvorrichtung mit einer Verzweigung des Gesamtstromes R ist, wie vorstehend bereits dargelegt, lageunabhängig einsetzbar, insbesondere auch in waagerechter Anordnung. Letztere ist besonders beim Einsatz derartiger Ventile an Tankausläufen von Vorteil, da einerseits die Aufstellhöhe der Tanks erheblich reduziert und andererseits das produktbeaufschlagte Ventilgehäuseteil unmittelbar am Tank angeordnet werden kann.

Durch die Art der Abzweigung des Reinigungsmittelstromes an der Stangendurchführung läßt sich dieser an der Stelle seines Ursprungs oder an anderer Stelle seines nachfolgenden Strömungsweges sehr kontrolliert bemessen. Bei jenen Ventilvorrichtungen, in denen der Reinigungsmittelstrom im Wege einer erzwungenen Strömung durch das Ventil geführt und im Anschluß an die Reinigung der Durchführung der Stange an der Abzweigungsstelle in Teilströme verzweigt ,wird, passiert der für die andere Stangendurchführung bestimmte Teilstrom vor Erreichen dieser nicht freigelegten Stangendurchführung einen Drosselspalt. Durch diese Maßnahme wird sichergestellt, daß an der zugeordneten Stangendichtung, die ggf. produktbeaufschlagt sein kann, kein unzulässiger Druckaufbau durch das Reinigungsmittel auftritt. Der für den zugänglich gemachten Sitzbereich und den angrenzenden Leckagehohlraum vorgesehene Teilstrom ist bezüglich eines Druckaufbaus unkritisch, da er in diesen Bereich, der über einen großen Durchtrittsquerschnitt mit der Umgebung des Ventils verbunden ist, quasi als freier Spritzstrahl eintritt.

Um die notwendigen Schaltkräfte der vorgeschlagenen Ventilvorrichtungen möglichst klein zu halten, können die Schließglieder im Bereich des jeweils zugeordneten Ventilgehäuseteils derart ausgeformt werden, daß die vom Fluid in den Ventilgehäuseteilen auf die Schließglieder ausgeübten Druckkräfte weitgehend ausgeglichen sind. Hierzu ist u.a. vorgesehen, daß die erste Betätigungsstange im Bereich ihrer Durchführung (A) durch das Ventilgehäuseteil auf den Sitzdurchmesser des Ventils in Form eines Druckausgleichskolbens durchmesservergrößert ist.

Wird, wie dies eine weitere vorteilhafte Ausgestaltung der Ventilvorrichtung vorsieht, das mit der zweiten Betätigungsstange verbundene Rohr in seinem gesamten Erstreckungsbereich zwischen dem Schließglied und seiner Durchführung annähernd auf den Sitzdurchmesser des Ventils durchmesservergrößert, dann ergeben sich zum einen günstige Bedingungen für die Ausbildung des Rieselfilms der Reinigungsflüssigkeit an der Innenwand des Rohres, falls der Reinigungsmittelstrom ohne weitere Verzweigung nacheinander die reinigungstechnisch relevanten Bereiche des Ventils durchströmt, und zum anderen denkbar günstige Verhältnisse im Hinblick auf die Vermeidung eines Druckaufbaus im Leckagehohlraum beispielsweise infolge defekter Sitzdichtungen oder aber durch ein unplanmäßiges oder unerwünschtes Öffnen des obenliegenden Schließgliedes.

Damit der Reinigungsmittelstrom für die vorstehend genannten Teilhubvarianten mit derselben Ausgestaltung der vorgeschlagenen Ventilvorrichtung realisiert werden kann, ist jeweils eine Anschlußöffnung zur Ableitung des Teilstromes R2 des Reinigungsmittelstromes im Bereich oberhalb der ersten Stangendichtung bzw. unterhalb der zweiten Stangendichtung ferngesteuert zu öffnen und zu schließen.

Falls mit den vorgeschlagenen Ventilvorrichtungen sowohl gegen als auch gleichsinnige Teilhübe durchgeführt werden sollen, unterliegen die einzelnen Teilhübe, wie dies eine weitere vorteilhafte Ausgestaltung der Ventilvorrichtung gemäß der Erfindung vorsieht, besonderen Bemessungskriterien. Das Freilegen der jeweiligen Stangendurchführung fordert zwangsläufig einerseits einen bestimmten Mindesthub, andererseits darf dieser Mindesthub dann nicht erreicht werden, wenn diese Stangendurchführung nicht freigelegt werden soll, die Hubrichtung bei gleichsinniger Teilhubbewegung jedoch wegen der notwendigen Freilegung des Sitzbereichs mit der Richtung des Teilhubes für das Freigeben der Durchführung übereinstimmt. In diesen Fällen führt das jeweilige Schließglied zwar gleichgerichtete, jedoch unterschiedlich große Teilhübe aus. Da die axiale Erstreckung der gemeinsamen Sitzfläche der beiden Schließglieder jedoch begrenzt ist und bei einer gegensinnigen Teilhubbewegung die Schließglieder noch einen geringen Sicherheitsabstand zum jeweiligen Ende der Sitzfläche aufweisen müssen, ist gemäß einer vorteilhaften Ausgestaltung der Ventilvorrichtung vorgesehen, daß die Schließglieder, bezogen auf ihre Ruhelage in der Schließstellung der Ventilvorrichtung, in Richtung des zweiten Schließgliedes axial versetzt angeordnet sind. Die gleichsinnige Teilhubvariante ist bezüglich der Einhaltung notwendiger Sicherheitsabstände zu den Rändern der Sitzfläche unkritisch, da das dem Rand der Sitzfläche benachbarte Schließglied bei der gegensinnigen Teilhubvariante bestimmungsgemäß einen wesentlich größeren Teilhub auszuführen hat.

Ein Ausführungsbeispiel der Ventilvorrichtung zum Durchführen des vorgeschlagenen Verfahrens gemäß den Ansprüchen 1 bis 7 ist in der Zeichnung dargestellt und wird im folgenden näher beschrieben.
Es zeigen
- Fig. 1,1a: jeweils einen Mittelschnitt durch eine Ventilvorrichtung nach der Erfindung in ihrer Schließlage, wobei die Dichtungsanordnungen im ersten Schließglied unterschiedlich ausgestaltet sind;
- Fig. 2,2a: die Ventilvorrichtung gemäß Figur 1 bzw. la in ihrer Offenstellung;
- Fig. 3: die Ventilvorrichtung gemäß Figur 1 in ihrer Reinigungsstellung mit einer Freigabe der oberen Stangendurchführung (A) und mit einem verzweigten Reinigungsmittelstrom (gegensinnige Teilhubbewegung);
- Figur 3a: die Reinigungsstellung der Ventilvorrichtung gemäß Figur 3 mit einer im Bereich der Stangendurchführung (A) modifizierten Ausgestaltung der Abzweigungsstelle für das Reinigungsmittel;
- Figur 4: die Ventilvorrichtung gemäß Figur 1 in ihrer Reinigungsstellung mit einer Freigabe der unteren Stangendurchführung (C) und mit einem verzweigten Reinigungsmittelstrom (gleichsinnige Teilhubbewegung) und
- Figur 5: eine schematische Darstellung der gleichermaßen mit der Ventilvorrichtung gemäß Figur 1 realisierbaren gegen- oder gleichsinnigen Teilhübe.

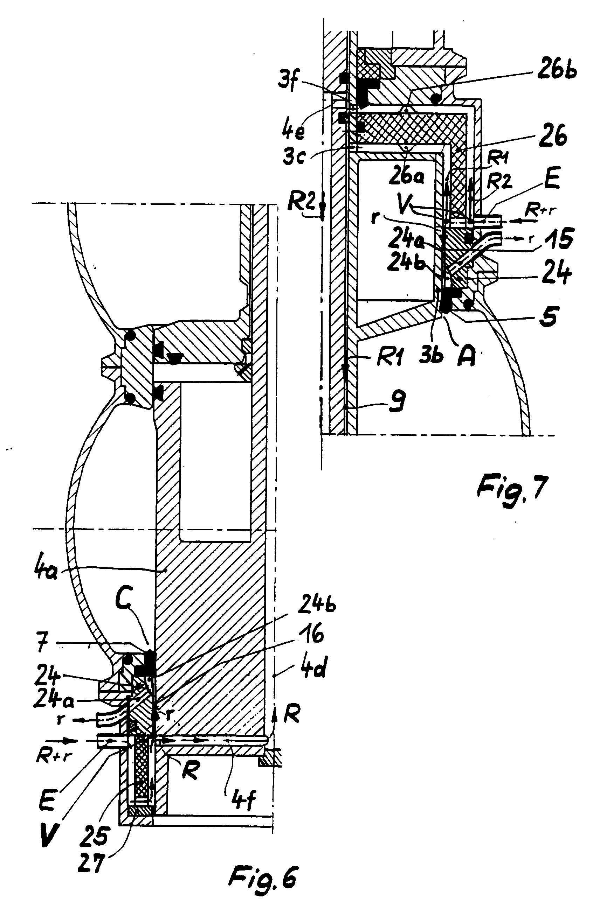

Ein Ausführungsbeispiel der Ventilvorrichtung zum Durchführen des vorgeschlagenen Verfahrens gemäß den Ansprüchen 8 bis 11 ist in den Figuren 6 und 7 dargestellt und wird im folgenden kurz erläutert. Es zeigen
- Figur 6: einen Mittelschnitt durch eine Ventilvorrichtung nach der Erfindung im Bereich der den Betätigungseinrichtungen abgewandten Stangendurchführung (C), wobei die Reinigungsmittelquelle in der Umgebung des Doppelsitzventils vorgesehen ist und
- Figur 7: einen Mittelschnitt durch eine yentilvorrichtung gemäß Figur 6 im Bereich der den Betätigungseinrichtungen zugewandten Stangendurchführung (A).

Ein Doppelsitzventil (Fig.1, 1a), dessen Ventilgehäuse 1 aus den Ventilgehäuseteilen 1a und 1b gebildet wird, weist einen diese Ventilgehäuseteile in ihrem Verbindungsbereich durchdringenden Sitzring 2 auf. Im lezteren sind innerhalb einer zylindrischen Sitzfläche 2a zwei schieberartig ausgebildete Schließglieder 3 und 4 gleitend und über Sitzdichtungen 13 bzw. 14 radial und über die Dichtung 13a oder 13 auch axial gegeneinander dichtend verschiebbar angeordnet. Das untenliegende Schließglied 4 verlängert sich in ein Rohr 4a, das in seinem gesamten Erstreckungsbereich zwischen dem Schließglied 4 und seiner Durchführung (C) durch das untere Ventilgehäuseteil 1b annähernd auf den Sitzdurchmesser des Ventils durchmesservergrößert ist. Das Rohr 4a bildet einerseits die Verbindung zwischen einem sowohl in der Schließ- als auch in der Offenstellung des Ventils zwischen den Schließgliedern 3 und 4 gebildeten Leckagehohlraum 6 und der Umgebung des Ventils und andererseits den Druckausgleichskolben zum Ausgleich der vom Fluid in dem Ventilgehäuseteil 1b auf das Schließglied 4 ausgeübten Druckkräfte. Über eine zweite Stangendichtung 7 ist das Rohr 4a im Ventilgehäuseteil 1b abgedichtet, und es wird zusätzlich über einen Führungsring 11 in einem nicht näher bezeichneten rohrförmigen Ansatz am Ventilgehäuseteil 1b radial geführt. Das Schließglied 4 ist über das Rohr 4a und ein Verbindungsteil 4c mit einer in eine Betätigungseinrichtung D, die oberhalb des Ventils angeordnet, jedoch im vorliegenden Fall nicht dargestellt ist, hineingeführten zweiten Betätigungsstange 4b, die koaxial vom Rohr 4a umfaßt wird, verbunden, wobei innerhalb des Verbindungsteils 4c wenigstens eine zweite Zulaufbohrung 4f angeordnet ist, die eine Verbindung zwischen einer zweiten Kammer 10 unterhalb der zweiten Stangendichtung 7 und einer in axialer Richtung innerhalb der zweiten Betätigungsstange 4b angeordneten Bohrung 4d herstellt.

Das erste Schließglied 3 ist mit einer auf der zweiten Betätigungsstange 4b des zweiten Schließgliedes 4 gelagerten, als Hohlstange ausgebildeten ersten Betätigungsstange 3a ausgestattet, die sich im Bereich ihrer Durchführung (A) durch das Ventilgehäuseteil la in einen auf den Sitzdurchmesser des Ventils durchmesservergrößerten Druckausgleichskolben 3b erweitert. Dieser trennt über eine erste Stangendichtung 5 eine erste Kammer 8 vom Ventilgehäuseteil 1a, wobei ein zweiter Führungsring 12 im Bereich weiterer, nicht näher bezeichneter Bauteile der Führung der aus dem Ventilgehäuseteil 1a herausgeführten Betätigungsstange 3a dient, die im Anschluß an den Druckausgleichskolben 3b eine Fortsetzung findet.

Ein zwischen der ersten Betätigungsstange 3a und der in dieser koaxial geführten zweiten Betätigungsstange 4b gebildeter Ringspalt 9 ist einerseits mit dem Leckagehohlraum 6 und andererseits über eine erste Zulaufbohrung 4e im Bereich seines vom Leckagehohlraum 6 abgewandten Endes mit der Bohrung 4d verbunden. Die erste Kammer 8 weist oberhalb der ersten Stangendichtung 5 eine über eine fernsteuerbare erste Verschlußeinrichtung 21 schaltbare erste Auslaßöffnung 17 auf. Die zweite Kammer 10 verfügt unterhalb der zweiten Stangendichtung 7 über eine mittels einer zweiten Verschlußeinrichtung 23 fernsteuerbare zweite Auslaßöffnung 22. An ihrem der ersten Stangendichtung 5 abgewandten Ende weist die erste Kammer 8 infolge einer im Druckausgleichskolben 3b ausgebildeten umlaufenden Ausnehmung 3e eine Querschnittserweiterung auf, die in der dargestellten Schließstellung des Ventils über einen ersten Drosselspalt 15 mit dem darüberliegenden, nicht näher bezeichneten Ringraum verbunden ist. Letzterer ist über wenigstens eine Verbindungsbohrung 3c mit dem Ringspalt 9 verbunden. Die Abdichtung des Druckausgleichskolbens 3b oberhalb der ersten Ausnehmung 3e gegenüber einem ihn berandenden, nicht näher bezeichneten Ventilgehäuseteil wird über eine dritte Stangendichtung 18 sichergestellt. Für eine gehäuseseitige Abdichtung der sich oberhalb des Druckausgleichskolbens 3b fortsetzenden ersten Betätigungsstange 3a sorgt eine vierte Stangendichtung 19. Eine fünfte Stangendichtung 20 zwischen der ersten und der zweiten Betätigungsstange 3a bzw. 4b bildet die Begrenzung des mit dem Leckagehohlraum 6 in Verbindung stehenden Teils des Ringspaltes 9.

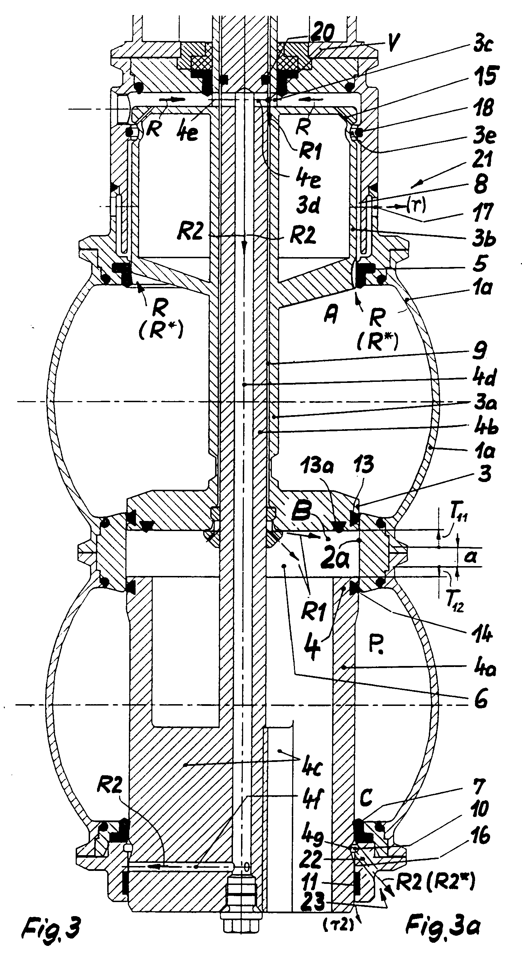

Unterhalb der zweiten Stangendichtung 7 ist im Rohr 4a eine umlaufende zweite Ausnehmung 4g vorgesehen, die über einen zweiten Drosselspalt 16 mit der zweiten Zulaufbohrung 4f verbunden ist und die sich in der dargestellten Schließlage des Ventils in die zweite Kammer 10 erweitert. Eine andere vorteilhafte Ausgestaltung der Ventilvorrichtung sieht in diesem Bereich eine Gruppe zweiter Ausnehmungen 4g vor, wobei die Gruppe durch voneinander getrennte, in Richtung der oder schräg zur Ventilachse orientierte, über den Umfang des Rohres 4a verteilte Vertiefungen gebildet wird. Eine adäquate Ausbildung an der oberen Stangendurchführung ist aus Figur 3a ersichtlich.

Mit (A), (B) und (C) sind die im Zuge der Anwendung des vorgeschlagenen Verfahrens relevanten Bereiche des Doppelsitzventils in besonderer Weise gekennzeichnet, wobei die Durchführung der ersten Betätigungsstange 3a (im Bereich ihres Druckausgleichskolbens 3b) die Bezeichnung (A) trägt, der Leckagehohlraum 6 und der angrenzende, dem Reinigungsmittelstrom zugänglich zu machende Sitzbereich mit (B) gekennzeichnet sind und die Durchführung des Rohres 4a durch das untere Ventilgehäuseteil 1b die Bezeichnung (C) führt. Der Ruhelageabstand der Schließglieder 3 und 4 ist mit a gekennzeichnet, mögliche gegen- oder gleichsinnige Teilhübe tragen die Bezeichnung Tij und die Bezeichnung H kennzeichnet die Öffnungsrichtung bzw. den öffnungshub der Ventilvorrichtung.

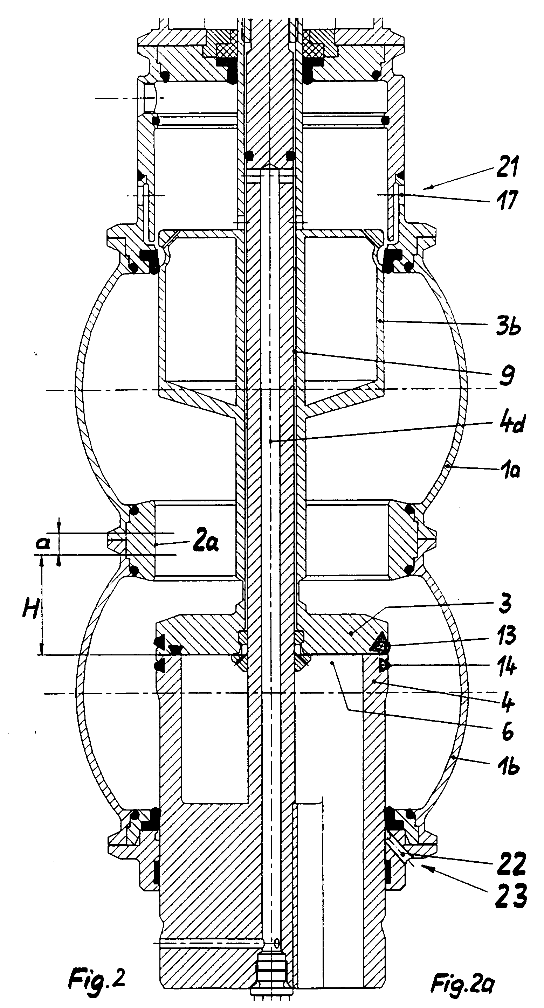

Die Figuren 2 und 2a zeigen die Offenstellung der vorgeschlagenen Ventilvorrichtung, wobei die Schließglieder 3,4 aus ihrer Sitzfläche 2a und aus ihrem Ruhelageabstand a heraus um den Öffnungshub H nach unten verschoben sind. Bei der Ausführung gemäß Figur 2a verfügt die erste Sitzdichtung 13 im ersten Schließglied 3 neben ihrer radialen Dichtwirkung gegenüber der Sitzfläche 2a beim Kontakt der Schließglieder 3,4 miteinander noch über eine in axialer Richtung orientierte Dichtwirkung gegenüber dem zweiten Schließglied 4, so daß der Leckagehohlraum 6 zum zweiten Ventilgehäuseteil 1b hin ebenso verschlossen ist. Diese Ausführung gewährleistet ein nahezu leckagefreies Schalten der Ventilvorrichtung, da der Raum zwischen den zusammengeführten Schließgliedern 3,4 einerseits und der Sitzfläche 2a andererseits minimiert ist. Die Auslaßöffnungen 17 und 22 sind im vorliegenden Fall geöffnet, da die fernsteuerbare Verschlußeinrichtung 21 bzw. 23 nicht an gesteuert ist. Ein Verschluß dieser Auslaßöffnungen wäre in dieser Ventilstellung jedoch ebenso möglich,

Aus den Figuren 3 und 3a wird ersichtlich, daß bei einer Verschiebung des ersten Schließgliedes 3 mittels seiner Betätigungsstange 3a um den Teilhub T11 in Richtung des Ventilgehäuseteils la die mit der ersten Stangendichtung 5 in der Schließlage des Ventils zusammenwirkende Dichtungsstelle des Druckausgleichskolbens 3b ebenfalls um diesen Teilhub in Richtung der ersten Kammer 8 verschoben wird. Gleichzeitig erfolgt eine Verschiebung des zweiten Schließgliedes 4 über seine Betätigungsstange 4b um den gegensinnigen Teilhub T21. Der Druckausgleichskolben 3b ist notwendigerweise im Bereich der ersten Stangendichtung 5 derart ausgebildet, daß mit dem Teilhub T11 die Durchführung (A) zur ersten Kammer 8 hin freigegeben wird, so daß vom Ventilgehäuseteil 1a ein Reinigungsmittelstrom R abgezweigt und durch die freigegebene Durchführung (A) hindurch und in die angrenzende erste Kammer 8 eingeleitet wird. Von dort gelangt dieser über die Verbindungsbohrung 3c in den Ringspalt 9. Hier verzweigt er sich an einer Verzweigungstelle V in die Teilströme R1 und R2, wobei der Teilstrom R1 über den weiterführenden Ringspalt 9 in den Leckagehohlraum 6 und den angrenzenden zugänglich gemachten Sitzbereich 2a gelangt (beide Bereiche sind mit (B) gekennzeichnet), wobei der Teilstrom R2 über die erste Zulaufbohrung 4e in die Bohrung 4d einströmt, um von dort über die zweite Zulaufbohrung 4f und den zweiten Drosselspalt 16 der zweiten Kammer 10 unterhalb der zweiten Stangendichtung 7 zuzuströmen. Dabei können das Rohr 4a und der erste Führungsring 11 derart zueinander bemessen werden, daß zwischen ihnen der Durchtritt eines relativ kleinen Teilstromes r2 in die Umgebung des Ventils möglich ist, während der restliche, wesentlich größere Anteil R2* über die zweite Auslaßöffnung 22 abströmt. Im Bereich des Leckagehohlraumes 6 wird der Teilstrom R1, ausgehend von der freien Sitzfläche der Schließglieder 3,4 mit ihrem Ruhelageabstand a, auf die angrenzende, um die gegensinnigen Teilhübe T11 und T21 zugänglich gemachte Sitzfläche 2a geleitet. Damit werden nach dem ersten reinigungstechnisch relevanten Bereich, der Durchführung (A), der zweite und der dritte relevante Bereich (B) und (C) quasi parallel einer Reinigung unterzogen. Die Auslaßöffnung 17 ist über die Verschlußeinrichtung 21 geschlossen, damit der an der Durchführung (A) gewonnene Reinigungsmittelstrom R gezwungen wird, in die reinigungstechnisch relevanten Bereiche (B) und (C) einzutreten.

Falls eine Reinigung der sich labyrinthartig zur Auslaßöffnung 17 hin verzweigenden ersten Kammer 8 angezeigt ist, kann ein über die Auslaßöffnung 17 abströmender relativ kleiner Teilstrom r zugelassen werden. Dieser Teilstrom ist bei der Bemessung des Gesamtstromes R (Erhöhung auf R*) zu berücksichtigen.

Die erste Ausnehmung 3e im Druckausgleichskolben 3b ist derart zur dritten Stangendichtung 18 positioniert, daß ein ungehinderter Durchtritt des Reinigungsmittelstromes R aus der ersten Kammer 8 in den Ringspalt 9 möglich ist. Dabei wird der erste Drosselspalt 15 quasi im Bypass umgangen, so daß der Reinigungsmittelstrom R an dieser Stelle ungedrosselt bleibt. Demgegenüber erfüllt der zweite Drosselspalt 16 seine Drosselfunktion und verhindert damit, daß der Teilstrom R2 an der ggf. produktbeaufschlagten zweiten Stangendichtung 7 keinen unzulässigen Druckaufbau hervorruft.

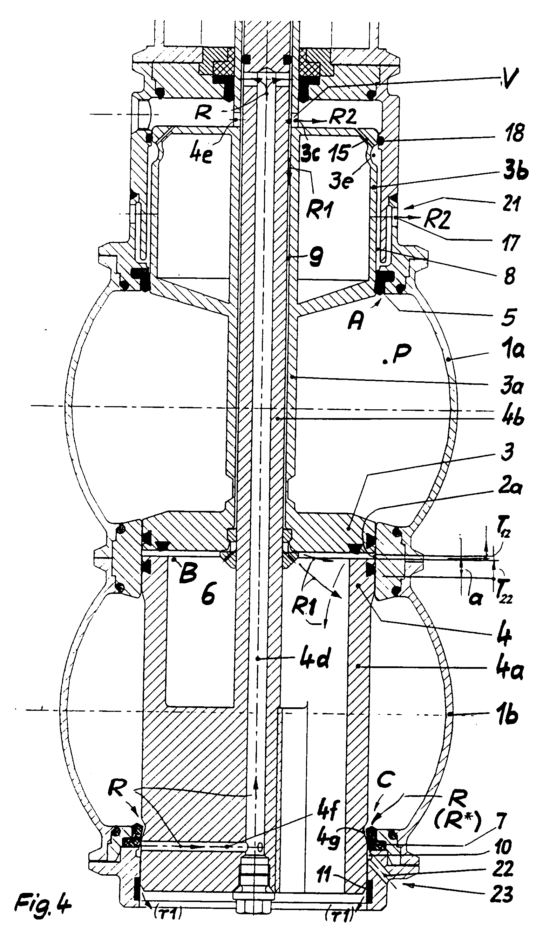

Das alternative Reinigungsverfahren, bei dem der Reinigungsmittelstrom R an der Durchführung C des Rohres 4a durch den Teilhub T22 des zweiten Schließgliedes 4 mittels seiner Betätigungsstange 4b in Richtung des ersten Ventilgehäuseteils 1a aus dem unteren Ventilgehäuseteil 1b abgezweigt wird, ist in Figur 4 dargestellt. Gleichzeitig erfolgt eine gleichsinnige Verschiebung des ersten Schließgliedes 3 über dessen Betätigungsstange 3a um den Teilhub T12.

Es ist von Vorteil, das Rohr 4a im Bereich des ersten Führungsringes 11 derart zu bemessen, daß dort ein relativ kleiner Teilstrom r1 des Reinigungsmittels in die Umgebung der Ventilvorrichtung austreten kann. Abhängig von der Größe dieses Teilstromes wird an der Durchführung C des Rohres 4a im zweiten Ventilgehäuseteil 1b ein Reinigungsmittelstrom R* abgezweigt, der den für die beiden anderen Bereiche A und B notwendigen Reinigungsmittelstrom R sicherstellt. Letzterer gelangt über die zweite Ausnehmung 4g im Bereich der zweiten Stangendichtung 7 ungedrosselt in die zweite Zulaufbohrung 4f und von dort in die Bohrung 4d, um von hier über die erste Zulaufbohrung 4e in den Ringspalt 9 einzutreten. Dort erfolgt an einer Verzweigungsstelle V im Bereich der Verbindungsbohrung 3c eine Verzweigung in die Teilströme R1 und R2. Teilstrom R1 strömt, wie dies bereits in Figur 3 dargestellt ist, dem Leckagehohlraum 6 und den angrenzenden freigemachten Sitzflächen 2a zu, während der Teilstrom R2 über den ersten Drosselspalt 15 in die erste Kammer 8 gelangt, die über die dritte Stangendichtung 18 gegenüber dem Ringraum oberhalb des Druckausgleichskolbens 3b abgedichtet ist. Die Auslassöffnung 17 ist offen, so daß der Reinigungsmittelstrom R2 aus dem reinigungstechnisch kritischen Bereich (A) oberhalb der ersten Stangendichtung 5 in die Umgebung der Ventilvorrichtung austreten kann. Da der Teilstrom R2 den ersten Drosselspalt 15 zwangsweise passieren muß, wird ein unzulässiger Druckaufbau im Reinigungsmittelstrom R2 oberhalb der ggf. produktbeaufschlagten ersten Stangendichtung 5 sicher vermieden.

In den Figuren 2 bis 4 gekennzeichnete, aber in der zugeordneten Beschreibung nicht näher erläuterte Bauteile und Bezeichnungen oder in der Beschreibung zwar erwähnte, in den Figuren aber nicht angezogene Bauteile sind im einzelnen in der Beschreibung zu den Figuren 1 und 1a abgehandelt. Soweit der Innenraum der Ventilgehäuseteile 1a,1b in den Figuren 3 und 4 mit P gekennzeichnet ist, so bedeutet dies, daß beim Reinigungsverfahren dort ggf. Produkt anstehen kann.

Sofern die alternativen Reinigungsverfahren mit einer Freigabe der Durchführung (A) bzw. der Durchführung (C) wahlweise, je nach Bedarf, an demselben Ventil zur Anwendung kommen sollen, ist vorgesehen, daß die Auslauföffnungen 17 und 22 zur Ableitung des Teilstromes R2 des Reinigungsmittels ferngesteuert zu öffnen und zu schließen sind.

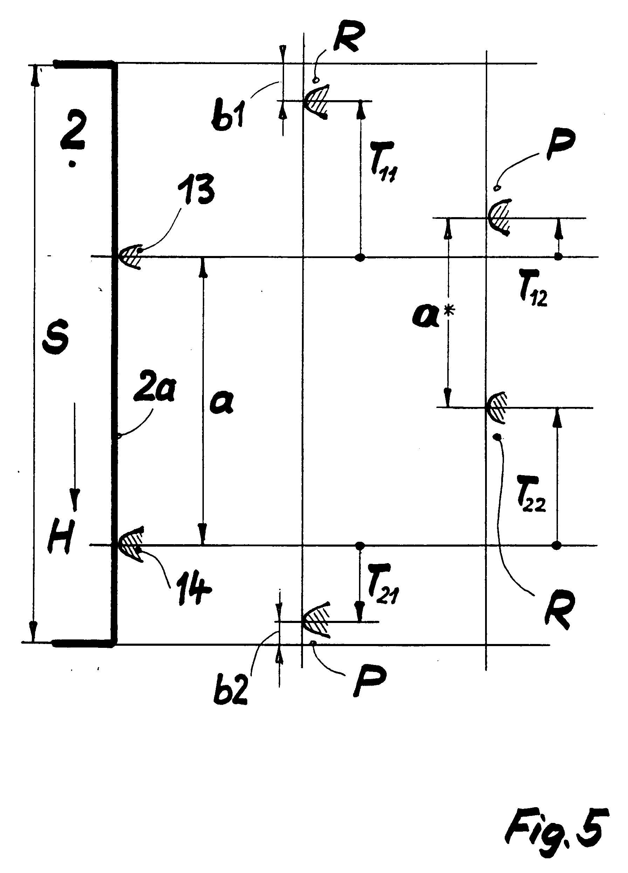

Die für die alternativen Reinigungsverfahren notwendigen Teilhübe sind in Figur 5 dargestellt. Die axiale Erstreckung der Sitzfläche 2a ist mit S und die Öffnungsrichtung der Ventilvorrichtung ist mit H gekennzeichnet. Der linke Teil der Darstellung zeigt die erste und zweite Sitzdichtung 13 bzw. 14 in ihrer Ruhelage, das heißt in der Schließlage der Ventilvorrichtung, wobei der Ruhelageabstand a vorgesehen ist. Es ist ersichtlich, daß die Dichtungen 13, 14 und damit die Schließglieder 3, 4 in Richtung des zweiten Schließgliedes 4 innerhalb der Sitzfläche 2a axial versetzt angeordnet sind. In der mittleren Darstellung nehmen die Dichtungen 13, 14 ihre jeweilige äußere Endlage ein, wenn sie um gegensinnige Teilhübe T11 bzw. T21 verschoben sind. Die erste Sitzdichtung 13 verfügt dabei über einen Randabstand b1 zum oberen Ende der Sitzfläche 2a, während die zweite Sitzdichtung 14 einen Randabstand b2 zum unteren Ende der Sitzfläche 2a aufweist. In der rechten Darstellung sind die Schließglieder 13, 14 um gleichsinnige Teilhübe T12 bzw. T22 aus ihrer Ruhelage heraus verschoben.

Man entnimmt weiterhin, daß die Teilhübe T11 und T21 bzw. T12 und T22 unterschiedlich sind. Dies ergibt sich zwangsläufig daraus, daß über den Teilhub T11 die Durchführung (A) geöffnet werden muß, während der Teilhub T21 lediglich das Freilegen der Sitzfläche des gegebenenfalls produktbeaufschlagten zweiten Schließgliedes 4 bewirkt. Der Teilhub T11 ist daher größer als der Teilhub T21 auszubilden (vergleiche hierzu auch Figur 3).

Bei der gleichsinnigen Teilhubbewegung (vergleiche rechte Darstellung in Figur 5 und Figur 4) erfolgt das Öffnen der Durchführung (C) des Rohres 4a über den Teilhub T22, während T12 lediglich wiederum die Sitzfläche des ersten Schließgliedes 3 freilegt. Aus diesem Grunde ist hier der Teilhub T22 größer als der Teilhub T12 ausgelegt, wobei jedoch sichergestellt ist, daß nach Vollzug der gleichsinnigen Teilhübe T12 und T22 das zweite Schließglied 4 sich nicht gerade in jener Position befindet, die das erste Schließglied 3 zuvor in seiner Schließstellung eingenommen hat, bevor es den Teilhub T12 vollzogen hat. Zu Sicherstellung einer einwandfreien Reinigung des ersten Schließgliedes 3 darf das zweite Schließglied 4 nach Vollzug des Teilhubes T22 die Schließstellung des ersten Schließgliedes 3 noch nicht erreicht haben; es ist ein ausreichender Sicherheitsabstand a* gegeben.

Aus den vorstehenden Ausführung folgt zwingend, daß sich die Schließglieder 3, 4 in ihrer Schließstellung nicht um die senkrecht zur Rotationsachse des Sitzringes 2 orientierte Symmetrieachse gruppieren können, sondern vielmehr in ihrer Schließstellung asymmetrisch im Sitzring 2 positioniert sind.

Die vorgeschlagenen Verfahren und die beispielhaft vorgestellten Ventilvorrichtungen zu ihrer Durchführung ermöglichen es nun in der Tat erstmals, daß alle relevanten Bereiche des Doppelsitzventils mit einem einzigen Reinigungsmittelstrom nacheinander oder durch Verzweigung desselben hinter der freigelegten Durchführung auch nebeneinander oder neben- und hintereinander einer Reinigung unter minimalem, ökonomischem und umweltschonendem Einsatz von Reinigungs- und/oder Desinfektionsmittel unterzogen werden können.

Die Verfahren gemäß der Erfindung sind allerdings nicht allein auf die vorstehend konkret vorgeschlagenen Ventilvorrichtungen anwendbar, sondern haben auch Gültigkeit für die Mehrzahl der in den vorgenannten Druckschriften bekannt gewordenen Schließgliedkonfigurationen, Öffnungsrichtungen und Teilhubvarianten. Sie sind, wie bereits dargelegt, auf Doppelsitzventile anwendbar, die einerseits mit einem Sitzteller und andererseits mit einem als Schieber ausgebildeten Schließglied ausgestattet sind, wobei lediglich jene Anordnungen auszuschließen sind, bei denen im Hinblick auf die Forderung leckagefreien Schaltens das schieberartig ausgebildete Schließglied im Zuge der Öffnungsbewegung des Doppelsitzventils zunächst in zur Öffnungsbewegung entgegengesetzter Richtung eine "Abholbewegung" in Richtung des Sitztellers ausführt (vergleiche hierzu DE 31 08 778 C2). Hinsichtlich der die vorgeschlagenen Verfahren sicherstellenden Betätigungseinrichtungen für die Betätigungsstangen der Schließglieder des Doppelsitzventils ist lediglich zu fordern, daß diese einerseits die Öffnungsbewegung des Doppelsitzventils mit dem Öffnungshub H und andererseits bei Realisierung der alternativen Reinigungsverfahren an derselben Ventilvorrichtung die gegensinnigen Teilhübe T11, T21 oder die gleichsinnigen Teilhübe T12, T21 ermöglichen müssen.

Die Lage der Verzweigungstelle V ist im Ausführungsbeispiel lediglich beispielhaft gewählt. Anstelle ihrer Anordnung im Ringspalt 9 kann diese auch an anderer Stelle im Ventil vorgesehen werden; beim Transport des Reinigungsmittels über die Bohrung 4d vorzugsweise zwischen deren Ende und der Durchführung (A). Wird sie beispielsweise nahe an der Durchführung (A) positioniert, so kann von hier ein über eine Drosselstelle 15 geführter Teilstrom nahezu drucklos an die Stangendichtung der Durchführung (A) und weiter in die Umgebung des Ventils geführt werden, während der andere Teilstrom von der Verzweigungsstelle V ungedrosselt den überwiegenden Teil der Stangendurchführung (A) reinigt und über den Ringspalt 9 in den Leckagehohlraum 6 und den zugänglich gemachten Sitzbereich 2a eingeleitet wird. In der Schließ- und Offenstellung des Ventils stellt die Verbindung des Bereichs unmittelbar hinter der Stangendichtung (A) mit der Umgebung des Ventils über die ansich für den Austritt des Reinigungsmittelteilstromes bestimmte Auslaßöffnung 17 quasi eine Leckagekontrollöffnung dar, die über den einwandfreien Zustand der Stangendichtung Auskunft gibt.

Auf den grundsätzlichen Aufbau der Ventilvorrichtung braucht im Zusammenhang mit den Figuren 6 und 7 nicht im einzelnen eingegangen werden, da sie in den Figuren 1 bis 4 hinreichend erläutert wurde. Es soll lediglich auf die Besonderheiten im Bereich der Stangendurchführung hingewiesen werden.

Zwischen dem Rohr 4a und einem nicht näher bezeichneten Gehäuse ist ein Einsatz 24 angeordnet, der mit dem Rohr 4a den Drosselspalt 16 bildet und eine Ablaufbohrung 24b zur Ableitung des Teilstromes (r) aus einer an die Stangendichtung 7 angrenzenden von dem Einsatz 24 teilweise gebildeten Kammer 24b in die Umgebung des Ventils aufnimmt (Fig.6). Die baugleiche Anordnung findet sich in Figur 7. Hier wird zwischen dem Einsatz 24 und dem Druckausgleichskolben 3b der Drosselspalt 15 gebildet.

Unterhalb des Einsatzes 24 (Fig.6) ist ein erstes Strömungsführungsteil 25 angeordnet, welches das über eine Einleitungsstelle (E) eingeleitete Reinigungsmittel (R+r) in den Bereich des unteren Endes des Rohres 4a verbringt, es dort umleitet und anschließend einen Teil der Mantelfläche des Rohres 4a reinigt. An der Verzweigungsstelle (V) wird der Reinigungsmittelstrom (R+r) in die Teilströme (R) und (r) verzweigt. Der Teilstrom (r) erfährt in dem Drosselspalt 16 eine Drosselung und gelangt nahezu drucklos an die benachbarte Stangendichtung 7, um über die Ablaufbohrung 24a in die Umgebung des Ventils auszutreten. Der Teilstrom (R) strömt ungedrosselt über die Zulaufbohrung 4f den anderen relevanten Bereichen des Ventils zu, um hier gemäß dem vorgeschlagenen Verfahren weiterbehandelt zu werden. Ein Führungs- und Abstreifteil 27 verhindert einen Eintrag von groben Verunreinigungen aus der Umgebung des Ventils in den Bereich der Stangendurchführung und es dient ggf. der Führung des Rohres 4a.

Der über die Einleitungsstelle (E) in den Bereich der oberen Stangendurchführung (A) aus der Umgebung des Ventils eingeleitete Reinigungsmittelstrom (R+r) verzweigt sich an der Verzweigungsstelle (V) in die Teilströme (R1, R2) und in den Teilstrom (r), wobei letzterer den in Figur 6 bereits geschilderten grundsätzlichen Verlauf - in diesem Falle zur Stangendichtung 5 und von dort in die Umgebung des Ventils - nimmt. Ein zweites Strömungsführungsteil 26 dient der Separierung und ungedrosselten Fortführung der Teilströme (R1 und R2), wobei ein erster und ein zweiter Abstandshalter 26a bzw. 26b für eindeutig bestimmte Durchtrittsquerschnitte und hinreichend definierte Strömungs- und Druckausbildung in den Spalten beiderseits des zweiten Strömungsführungsteiles sorgen. Der Teilstrom R1 gelangt über die Verbindungsbohrung 3c in den Ringspalt 9, der Teilstrom R2 strömt durch eine zweite Verbindungsbohrung 3f und die erste Zulaufbohrung 4e der Bohrung 4d zu, um von dort die andere Stangendurchführung (C) zu reinigen.
Das in den Figuren 6 und 7 dargestellte Einleitungs- und Verteilungssystem für den aus der Umgebung des Ventils herangeführten Reinigungsmittelstrom ist unabhängig von der Art, wie dieser Reinigungsmittelstrom im weiteren Verlauf durch das Doppelsitzventil weiterbehandelt wird. Im weiteren Verlauf sind eine Vielzahl von Abwandlungen möglich, wobei eine reine Reihenschaltung der reinigungstechnisch relevanten Bereiche ebenso infrage kommt wie eine reine Parallelschaltung oder eine gemischte Schaltung aus Reihen- und Parallelschaltung.

## Patentansprüche

1. Verfahren zur Reinigung eines Doppelsitzventils, insbesondere eines leckagearm oder leckagefrei schaltenden Doppelsitzventils, das mit zwei seriell wirkenden und über Stangen (3a,3b;4a,4b) betätigbaren Schließgliedern (3,4) ausgestattet ist, die einen Leckagehohlraum (6) zwischen sich einschließen, wobei zumindest ein Schließglied einen Teilhub ausführt, der einen wesentlichen Teil einer diesem Schließglied zugeordneten Sitzfläche (2a) einem Reinigungsmittelstrom zugänglich macht, wobei die Abdichtung an der Sitzfläche (2a) erhalten bleibt und wobei die Stange (3a,3b) des einen Schließgliedes (3) über eine Durchführung (A) aus einem zugeordneten Ventilgehäuseteil (1a) und die Stange (4a, 4b) des anderen Schließgliedes (4) über eine andere Durchführung (C) aus einem zugeordneten Ventilgehäuseteil (1b) herausgeführt ist, **dadurch gekennzeichnet,** daß durch den Teilhub auch eine der beiden Durchführungen (A oder C) derart freigegeben wird, daß der Reinigungsmittelstrom (R) über die freigegebene Durchführung (A oder C) hindurch aus dem Ventilgehäuseteil (1a bzw. 1b) abgezweigt wird und dabei diese Durchführung (A oder C) und mindestens einen der folgenden Bereiche,
- die andere Durchführung (C bzw. A),
- den Leckagehohlraum (6) und
- die zugänglich gemachte Sitzfläche (2a),
reinigt.

2. Verfahren nach Anspruch 1, **dadurch gekennzeichnet,** daß der aus dem Ventilgehäuseteil (1a oder 1b) abgezweigte Reinigungsmittelstrom (R) eine der beiden Durchführungen (A bzw. C) der Stange an der Abzweigungsstelle und, ohne weitere Verzweigung nacheinander, in beliebiger Reihenfolge, vorzugsweise in der Weiterführung von oben nach unten, mindestens einen der folgenden Bereiche,
- die zugänglich gemachte Sitzfläche (2a),
- den Leckagehohlraum (6) und
- die andere Durchführung (C)
bzw. mindestens einen der folgenden Bereiche,
- die andere Durchführung (A),
- die zugänglich gemachte Sitzfläche (2a) und
- den Leckagehohlraum (6)
reinigt.

3. Verfahren nach Anspruch 1, **dadurch gekennzeichnet**, daß sich der Reinigungsmittelstrom (R) im Anschluß an die Reinigung einer der beiden Durchführungen (A bzw. C) der Stange an der Abzweigungsstelle in Teilströme Ri verzweigt, die die relevanten Bereiche des Doppelsitzventils reinigen, die nebeneinander oder neben- und hintereinander geschaltet sind.

4. Verfahren nach Anspruch 3, **dadurch gekennzeichnet**, daß sich der Reinigungsmittelstrom (R) in zwei Teilströme (R1,R2) verzweigt, von denen der eine (R1)
- die zugänglich gemachte Sitzfläche (2a) und
- den Leckagehohlraum (6)
und der andere (R2)
- die andere Durchführung (C bzw. A)
reinigt.

5. Verfahren nach einem der Ansprüche 1 bis 4, mit zwei schieberartig ausgebildeten Schließgliedern (3,4), **dadurch gekennzeichnet,** daß die Schließglieder (3,4) um gegensinnige Teilhübe (T11,T21) verschoben werden, wobei der Reinigungsmittelstrom (R) an der Stangendurchführung jenes Schließgliedes abgezweigt wird, dessen Teilhub entgegen der Öffnungsbewegung (H) des Ventils verläuft.

6. Verfahren nach einem der Ansprüche 1 bis 4, mit zwei schieberartig ausgebildeten Schließgliedern (3,4), von denen das eine unabhängig vom anderen und das andere abhängig angetrieben ist, **dadurch gekennzeichnet,** daß die Schließglieder (3,4) um gleichsinnige Teilhübe (T12,T22) verschoben werden, wobei der Reinigungsmittelstrom (R) an der Stangendurchführung jenes Schließgliedes abgezweigt wird, dessen Teilhub entgegen der Öffnungsbewegung (H) des Ventils verläuft und das abhängig angetrieben ist.

7. Verfahren nach einem der Ansprüche 1 bis 4, mit einem als Schieber und einem als Sitzteller ausgebildeten Schließglied (3,4), wobei das schieberartig ausgebildete Schließglied unabhängig angetrieben ist, **dadurch gekennzeichnet**, daß das schieberartig ausgebildete Schließglied um den Teilhub von dem auf seiner Sitzfläche verbleibenden Sitzteller entfernt wird.

8. Verfahren zur Reinigung eines Doppelsitzventils, insbesondere eines leckagearm oder leckagefrei schaltenden Doppelsitzventils, das mit zwei seriell wirkenden und über Stangen (3a,3b;4a,4b) betätigbaren Schließgliedern (3,4) ausgestattet ist, die einen Leckagehohlraum (6) zwischen sich einschließen, wobei zumindest ein Schließglied einen Teilhub ausführen kann, der einen wesentlichen Teil einer diesem Schließglied zugeordneten Sitzfläche (2a) einem aus der Umgebung herangeführten Reinigungsmittelstrom (R) zugänglich macht, wobei die Abdichtung an der Sitzfläche (2a) erhalten bleibt und wobei die Stange (3a,3b) des einen Schließgliedes (3) über eine Durchführung (A) aus einem zugeordneten Ventilgehäuseteil (1a) und die Stange (4a, 4b) des anderen Schließgliedes (4) über eine andere Durchführung (C) aus einem zugeordneten Ventilgehäuseteil (1b) herausgeführt ist, **dadurch gekennzeichnet**, daß der Reinigungsmittelstrom (R) über eine Einleitungsstelle (E) in das Doppelsitzventil eingeleitet wird, wo er die eine der beiden Durchführungen (A oder C) auf der Ventilgehäuseseite der Einleitungsstelle (E) und mindestens einen der folgenden Bereiche,
- die andere Durchführung (C bzw. A),
- den Leckagehohlraum (6) und
- die freiliegende bzw. die zugänglich gemachte Sitzfläche (2a),
reinigt.

9. Verfahren nach Anspruch 8, **dadurch gekennzeichnet**, daß sich der Reinigungsmittelstrom hinter der Einleitungsstelle (E) an der Verzweigungsstelle (V) in Teilströme (Ri) verzweigt, von denen ein Teilstrom (r) gedrosselt wird, die benachbarte Stangendichtung nahezu drucklos reinigt und anschließend in die Umgebung des Ventils geführt wird und ein Teilstrom R bzw. Teilströme (R1,R2) nach einem der in den Ansprüchen 2 bis 4 gekennzeichneten Verfahren anstelle des an der freigegebenen Durchführung (A oder C) gewonnenen Reinigungsmittelstromes weiterbehandelt wird.

10. Verfahren nach Anspruch 8 oder 9, mit zwei schieberartig ausgebildeten Schließgliedern (3,4), **dadurch gekennzeichnet**, daß die Schließglieder nach einem der in den Ansprüche 5 oder 6 gekennzeichneten Verfahren um Teilhübe verschoben werden.

11. Verfahren nach Anspruch 8 oder 9, mit einem als Schieber und einem als Sitzteller ausgebildeten Schließglied (3,4), wobei das schieberartig ausgebildete Schließglied unabhängig angetrieben ist, **dadurch gekennzeichnet**, daß das schieberartig ausgebildete Schließglied um den Teilhub von dem auf seiner Sitzfläche verbleibenden Sitzteller entfernt wird.

12. Ventilvorrichtung zum Durchführen des Verfahrens nach Anspruch 1 oder 2 oder 5, mit Schließgliedern (3,4), die einen Leckagehohlraum (6) zwischen sich einschließen und deren Stangen (3a,3b;4b) nach einer Seite aus einem Ventilgehäuse (1a,1b) herausgeführt und mit Betätigungseinrichtungen (D) verbunden sind, wobei das den Betätigungseinrichtungen zugewandte erste Schließglied (3) durch die erste Stange (3a,3b), die eine Durchführung (A) in einem zugeordneten Ventilgehäuseteil (1a) aufweist, unabhängig vom zweiten Schließglied (4) angetrieben und letzteres durch die zweite Stange (4b) angetrieben ist, dadurch gekennzeichnet, daß das zweite Schließglied (4) über ein Rohr (4a) mit der zweiten Stange (4b) verbunden ist, daß das Rohr (4a) letztere koaxial umfaßt und über eine andere Durchführung (C) aus dem anderen Ventilgehäuseteil (1b) herausgeführt ist, und daß die eine Durchführung (A) über einen Ringspalt (9) zwischen der ersten Stange (3a) und der in dieser koaxial geführten zweiten Stange (4b) des anderen Schließgliedes (4) eine Verbindung zum Leckagehohlraum (6) und über das Innere des Rohres (4a) und durch Öffnungen (4h) in der Wandung des Rohres (4a) hindurch eine Verbindung zur anderen Durchführung (C) aufweist und daß bei einem gegen die Öffnungsbewegung (H) des Ventils gerichteten Teilhub des ersten Schließgliedes (3) die eine Durchführung (A) freigelegt und dadurch der Reinigungsmittelstrom freigegeben wird.

13. Ventilvorrichtung zum Durchführen des Verfahrens nach Anspruch 1 oder einem der Ansprüche 3 bis 6, mit Schließgliedern (3,4), die einen Leckagehohlraum (6) zwischen sich einschließen und deren Stangen (3a,3b;4b) nach einer Seite aus einem Ventilgehäuse (1a,1b) herausgeführt und mit Betätigungseinrichtungen (D) verbunden sind, wobei das den Betätigungseinrichtungen zugewandte erste Schließglied (3) durch die erste Stange (3a,3b), die eine Durchführung (A) in einem zugeordneten Ventilgehäuseteil (1a) aufweist, und das zweite Schließglied (4) durch die zweite Stange (4b) angetrieben sind, **dadurch gekennzeichnet,** daß das zweite Schließglied (4) über ein Rohr (4a) mit der zweiten Stange (4b) verbunden ist, welches diese koaxial umfaßt und welches über eine andere Durchführung (C) aus dem anderen Ventilgehäuseteil (1b) herausgeführt ist, daß in der zweiten Stange (4b) in axialer Richtung eine Bohrung (4d) vorgesehen ist, die einerseits mit der einen Durchführung (A) und andererseits mit der anderen Durchführung (C) verbunden ist, daß der Verbindungsweg zwischen der Bohrung (4d) und der einen Durchführung (A) eine Verzweigungsstelle (V) aufweist, von der aus eine weitere Verbindung zu einem zwischen der ersten Stange (3a) und der in dieser koaxial geführten zweiten Stange (4b) gebildeten Ringspalt (9) vorgesehen ist, daß der Ringspalt (9) eine Verbindung zum Leckagehohlraum (6) aufweist und daß bei einem gegen die Öffnungsbewegung (H) des Ventils gerichteten Teilhub des ersten Schließgliedes (3) die eine Durchführung (A) bzw. des zweiten Schließgliedes (4) die andere Durchführung (C) freigelegt und dadurch der Reinigungsmittelstrom (R) freigegeben wird, der sich an der Verzweigungsstelle (V) in die Teilströme (R1, R2) verzweigt.

14. Ventilvorrichtung nach Anspruch 13, **dadurch gekennzeichnet**, daß der Verbindungsweg zwischen der einen Durchführung (A) und der Verzweigungsstelle (V) in der Schließstellung des Ventils oder in der Ventilstellung für die Freigabe der anderen Durchführung (C) einen ersten Drosselspalt (15) und daß der Verbindungsweg zwischen der anderen Durchführung (C) und der Bohrung (4d) in der Schließstellung des Ventils oder in der Ventilstellung für die Freigabe der einen Durchführung (A) einen zweiten Drosselspalt (16) aufweist.

15. Ventilvorrichtung nach einem der Ansprüche 12 bis 14, **dadurch gekennzeichnet**, daß das Rohr (4a) in seinem gesamten Erstreckungsbereich zwischen dem Schließglied (4) und seiner anderen Durchführung (C) annähernd auf den Sitzdurchmesser des Ventils durchmesservergrößert ist.

16. Ventilvorrichtung nach einem der Ansprüche 12 bis 15, **dadurch gekennzeichnet**, daß die erste Stange (3a,3b) im Bereich ihrer Durchführung (A) durch das Ventilgehäuseteil (1a) auf den Sitzdurchmesser des Ventils in Form eines Druckausgleichskolbens (3b) durchmesservergrößert ist.

17. Ventilvorrichtung nach einem der Ansprüche 12 bis 16, **dadurch gekennzeichnet,** daß eine Auslaßöffnung (17 oder 22) zur Ableitung des Teilstromes (R2) des Reinigungsmittelstromes im Bereich oberhalb der ersten Stangendichtung (5) bzw. unterhalb der zweiten Stangendichtung (7) ferngesteuert zu öffnen und zu schließen ist.

18. Ventilvorrichtung nach einem der Ansprüche 12 bis 17, **dadurch gekennzeichnet**, daß die Freigabe der Durchführungen (A,C) durch eine Gruppe erster Ausnehmungen (3e) in der ersten Stange (3a) oder in dem Druckausgleichskolben (3b) bzw. durch eine Gruppe zweiter Ausnehmungen (4g) im Rohr (4a) erfolgt, wobei jede der Gruppen voneinander getrennte, in Richtung der oder schräg zur Ventilachse orientierte, über den Umfang der Stange (3a) oder des Druckausgleichskolbens (3b) bzw. des Rohres (4a) verteilte Vertiefungen darstellen.

19. Ventilvorrichtung nach einem der Ansprüche 12 bis 18, mit zwei schieberartig ausgebildeten Schließgliedern (3,4), die Teilhübe ausführen können, wobei ihre jeweilige Abdichtung im Sitzbereich erhalten bleibt, **dadurch gekennzeichnet**, daß an derselben Ventilvorrichtung gegen- oder gleichsinnige Teilhübe (T11, T21 bzw. T12, T22) der Schließglieder (3,4) innerhalb einer zugeordneten Sitzfläche (2a) durchführbar sind, wobei für die Freigabe der einen Durchführung (A) der ersten Stange (3a;3b) im Ventilgehäuseteil (1a) der Teilhub (T11) des ersten Schließgliedes (3) und für die alternative Freigabe der anderen Durchführung (C) des Rohres (4a) im Ventilgehäuseteil (1b) der annähernd gleichgroße und gleichorientierte Teilhub (T22) des zweiten Schließgliedes (4) vorgesehen ist und daß bei gleichsinnigen Teilhüben der Teilhub (T12) des gegebenenfalls produktbeaufschlagten ersten Schließgliedes (3) derart bemessen ist, daß die eine Durchführung (A) geschlossen bleibt.

20. Ventilvorrichtung nach Anspruch 19, **dadurch gekennzeichnet**, daß die Schließglieder (3,4), bezogen auf ihre Ruhelage in der Schließstellung der Ventilvorrichtung, derart in Richtung des zweiten Schließgliedes (4) innerhalb der Sitzfläche (2a) axial versetzt angeordnet sind, daß bei gegensinnigen Teilhüben (T11, T21), wobei T11>T21 ist, diese mit einem geringen Sicherheitsabstand (b1 bzw. b2) zum jeweiligen Ende der Sitzfläche (2a) durchführbar sind.

21. Ventilvorrichtung zum Durchführen des Verfahrens nach einem der Ansprüche 8 bis 11 und ausgebildet nach einem der Ansprüche 12 bis 20, **dadurch gekennzeichnet**, daß im Bereich der Durchführungen (A und C) jeweils ein baugleicher Einsatz (24) zwischen dem Gehäuse und dem Druckausgleichskolben (3b) bzw. dem Rohr (4a) vorgesehen ist, der zum einen den Drosselspalt (15 bzw. 16) mit dem Druckausgleichskolben (3b) bzw. dem Rohr (4a) bildet und zum anderen eine Ablaufbohrung (24a) aufnimmt zur Ableitung des Teilstromes (r) aus einer an die Stangendichtung (5 bzw. 7) angrenzenden und von dem Einsatz (24) teilweise gebildeten Kammer (24b) in die Umgebung des Ventils.

## Claims

1. Process for cleaning a double seat valve, in particular a low-leakage or non-leaking double seat valve equipped with two serially effecting closure elements (3, 4) controllable by means of rods (3a, 3b; 4a, 4b), said closure elements enclosing a leakage cavity (6) between them, with at least one closure element performing a partial stroke that makes an essential part of a seat area (2a) assigned to this closure element accessible to a detergent stream, with the sealing at the seat area (2a) being maintained and with the rod (3a, 3b) of one closure element (3) leading through one passageway (A) from an assigned section (1a) of the valve casing, and the rod (4a, 4b) of the other closure element (4) leading through the other passageway (C) from an assigned section (1b) of the valve casing, characterized in that the partial stroke also clears one of both passageways (a or C) in a way that the detergent stream (R) is branched off through the cleared passageway (A or C) out of the section (1a or 1b) of the valve casing, cleaning this passageway (A or C) and at least one of the following sections:
- the other passageway (C or A),
- the leakage cavity, and
- the seat area (2a) made accessible.

2. Process according to Claim 1, characterized in that the detergent stream (R) branched off from the section (1a or 1b) of the valve casing cleans one of both passageways (A or C) of the rod at the branching off point and without further branching off at least one of the following sections one after the other, in any order, preferably in downward direction:
- the seat area (2a) made accessible,
- the leakage cavity (6), and
- the other passageway (C)
or at least one of the following sections:
- the other passageway (A),
- the seat area (2a) made accessible, and
- the leakage cavity (6).

3. Process according to Claim 1, characterized in that after the cleaning of one of both passageways (A or C) of the rod, the detergent stream (R) is divided into subsidiary streams Ri cleaning the relevant areas of the double seat valve that are connected in parallel or in parallel and in series.

4. Process according to Claim 3, characterized in that the detergent stream (R) divides into two subsidiary streams (R1, R2), one of which (R1) cleans
- the seat area (2a) made accessible, and
- the leakage cavity (6),
and the other one (R2) cleans
- the other passageway (C or A).

5. Process according to one of Claims 1 to 4, with two closure elements (3, 4) designed like slides, characterized in that the closure elements (3, 4) are shifted for opposing partial strokes (T11, T21), with the detergent stream (R) being branched off at each rod passageway of the closure element that has a partial stroke counter to the opening movement (H) of the valve.

6. Process according to one of Claims 1 to 4, with two closure elements (3, 4) designed like slides, one of which is driven independently from the other one, and the other one is driven dependently, characterized in that the closure elements (3, 4) are shifted for synonymous partial strokes (T12, T22), with the detergent stream (R) being branched off at the rod passageway of the closure element that has a partial stroke counter to the opening movement (H) of the valve and that is driven dependently.

7. Process according to one of Claims 1 to 4, with one closure element (3, 4) being designed as a slide and the other one being designed as a seat plate, with the closure element designed as a slide being driven independently, characterized in that the closure element designed as a slide is placed at a distance equal to the partial stroke from the seat plate remaining upon its seat area.

8. Process for cleaning a double seat valve, in particular a low-leakage or non-leaking double seat valve equipped with two serially effecting closure elements (3, 4) controllable by means of rods (3a, 3b; 4a, 4b), said closure elements enclosing a leakage cavity (6) between them, with at least one closure element being able to perform a partial stroke that makes an essential part of the seat area (2a) assigned to this closure element accessible to a detergent stream (R) supplied from the surrounding, with the sealing at the seat area (2a) being maintained, and with the rod (3a, 3b) of one closure element (3) leading through one passageway (A) off from an assigned section (la) of the valve casing, and the rod (4a, 4b) of the other closure element (4) leading through the other passageway (C) off from an assigned section (lb) of the valve casing, characterized in that the detergent stream (R) is introduced into the double seat valve at an introduction point (E) where it cleans one of both passageways (A or C) at the side of the introduction point (E) towards the valve casing and at least one of the following sections:
- the other passageway (C or A),
- the leakage cavity (6), and
- the seat area (2a) that is clear or made accessible.

9. Process according to Claim 8, characterized in that the detergent stream is divided at the branching off point (V) behind the introduction point (E) into subsidiary streams (Ri), of which a subsidiary stream (r) is reduced that performs an almost pressure-free cleaning of the adjacent rod sealing and is afterwards supplied to the surrounding of the valve, and a subsidiary stream R or subsidiary streams (R1, R2) according to one of the processes characterized in Claims 2 to 4 are treated further instead of the detergent stream extracted at the cleared passageway (A or C).

10. Process according to Claim 8 or 9, with two closure elements (3, 4) designed as slides, characterized in that the closure elements are shifted for partial strokes according to one of the processes described in Claim 5 or 6.

11. Process according to Claim 8 or 9, with one closure element (3, 4) being designed as a slide and the other one being designed as a seat plate, with the closure element designed as a slide being driven independently, characterized in that the closure element designed as a slide is placed at a distance equal to the partial stroke from the seat plate remaining upon its seat area.

12. Valve device for carrying out the process according to Claim 1, 2 or 5, with closure elements (3, 4) enclosing a leakage cavity (6) between them, with rods (3a, 3b; 4b) that lead off from one valve casing (1a, 1b) towards one side and that are connected with control devices (D), with the first closure element (3) facing the control devices being driven independently from the second closure element (4) by means of the first rod (3a, 3b) comprising a passageway (A) in an assigned section (1a) of the valve casing, and the second closure element being driven by the second rod (4b), characterized in that the second closure element (4) is connected with the second rod (4b) by means of a pipe (4a), that the pipe (4a) coaxially surrounds the second rod (4b) and leads through the other passageway (C) off from the other section (1b) of the valve casing, and that one passageway (A) comprises a connection to the leakage cavity (6) through an annular gap (9) between the first rod (3a) and the second rod (4b) of the other closure element (4) arranged coaxially in the first, and comprises a connection to the other passageway (C) through the interior of the pipe (4a) and through openings (4h) in the wall of the pipe (4a), and that at a partial stroke of the first closure element (3) directed opposite to the opening movement (H) of the valve, one passageway (A) is cleared, allowing the detergent stream to flow.

13. Valve device for carrying out the process according to Claim 1 or one of Claims 3 to 6, with closure elements (3, 4) enclosing a leakage cavity (6) between them and having rods (3a, 3b; 4b) leading off from one valve casing (1a, 1b) towards one side and being connected with control devices (D), with the first closure element (3) that faces the control devices being driven by means of the first rod (3a, 3b) comprising a passageway (A) in an assigned section (1a) of the valve casing, and the second closure element (4) being driven by means of the second rod (4b), characterized in that the second closure element (4) is connected with the second rod (4b) by means of a pipe (4a) surrounding it coaxially and leading through the other passageway (C) off from the other section (1b) of the valve casing, that a drilling (4d) in the second rod (4b) is provided along the length thereof, which is on one side connected with one passageway (A) and on the other side with the other passageway (C), that the connection path between the drilling (4d) and one passageway (A) comprises a branching off point (V) from which another connection to an annular gap (9) formed between the first rod (3a) and the second rod (4b) arranged coaxially in the first is provided, that the annular gap (9) provides a connection to the leakage cavity (6), and that at a partial stroke of the first closure element directed opposite to the opening movement (H) of the valve, one passageway (A), or at a partial stroke of the second closure element (4) the other passageway (C), is cleared allowing the detergent stream (R) that is divided into subsidiary streams (R1, R2) at the branching off point (V) to flow.

14. Valve device according to Claim 13, characterized in that the connection path between one passageway (A) and the branching off point (V) in the closed position of the valve or in the valve position for clearing the other passageway (C) comprises a first reduction gap (15), and that the connection path between the other passageway (C) and the drilling (4d) comprises a second reduction gap (16) in the closed position of the valve or in the valve position for clearing one passageway (A).

15. Valve device according to one of Claims 12 to 14, characterized in that the diameter of the pipe (4a) is enlarged in its whole extension area between the closure element (4) and the other passageway (C) to approximately the seat diameter of the valve,

16. Valve device according to one of Claims 12 to 15, characterized in that the diameter of the first rod (3a, 3b) in the area of its passageway (A) through the section (1a) of the valve casing is enlarged to the diameter of the valve seat in the form of a pressure balancing piston (3b).

17. Valve device according to one of Claims 12 to 16, characterized in that a discharge opening (17 or 22) for discharge of the subsidiary stream (R2) of the detergent stream can be opened and closed by remote control above the first rod sealing (5) or below the second rod sealing (7).

18. Valve device according to one of Claims 12 to 17, characterized in that the clearing of the passageways (A, C) is performed by means of a group of first grooves (3e) in the first rod (3a) or in the pressure balancing piston (3b) or by means of a group of second grooves (4g) in the pipe (4a), with each of the groups representing cavities separated from each other, aligned in direction of or at a certain angle to the valve axis, distributed over the diameter of the rod (3a), the pressure balancing piston (3b) or the pipe (4a) respectively.

19. Valve device according to one of Claims 12 to 18 with two closure elements (3, 4) designed as slides able to perform partial strokes, with their respective sealing in the seat area being maintained, characterized in that at the same valve device, partial strokes (T11, T21 or T12, T22) in opposite or synonymous direction of the closure elements (3, 4) can be performed within one assigned seat area (2a), with the partial stroke (T11) of the first closure element (3) being provided for clearing one passageway (A) of the first rod (3a, 3b) in the section (1a) of the valve casing and the partial stroke (T22) of the second closure element (4) of almost the same length and alignment being provided for alternative clearing of the other passageway (C) of the pipe (4a) in the section (1b) of the valve casing, and that for synonymous partial strokes, the partial stroke (T12) of the first closure element (3) possibly admitted by product is regulated in a way that one passageway (A) remains closed.

20. Valve device according to Claim 19, characterized in that in the closed position of the valve device, the closure elements (3, 4) are axially staggered relative to their resting position in direction of the second closure element (4) within the seat area (2a) in a way that in case of opposite partial strokes (T11, T21), with T11 > T21, they can be performed with a small safety distance (b1 or b2) to the respective end of the seat area (2a).

21. Valve device for carrying out the process according to one of Claims 8 to 11 and designed according to one of Claims 12 to 20, characterized in that in the area of the passageways (A and C), an equal insertion (24) between the casing and the pressure balancing piston (3b) or the pipe (4a) is provided respectively, on one hand forming the reduction gap (15 or 16) with the pressure balancing piston (3b) or the pipe (4a) and on the other hand accomodating a discharge drilling (24a) for discharge of the subsidiary stream (r) from a chamber (24b) adjacent to the rod sealing (5 or 7) and partially formed by the insertion (24) into the surrounding of the valve.

## Revendications

1. Procédé pour nettoyer une soupape à double siège, notamment une soupape à double siège qui procure une obturation avec une faible fuite ou sans fuite, équipée de deux organes de fermeture (3,4) agissant en série, pouvant être actionnés par l'intermédiaire de tiges (3a, 3b; 4a,4b) et enserrant entre eux une cavité de fuite (6),
procédé selon lequel au moins un organe de fermeture exécute une course partielle, qui rend une partie importante d'une surface de siège (2a), associée à cet organe de fermeture, accessible à un courant d'un fluide de nettoyage, l'étanchéité étant conservée au niveau de cette surface de siège (2a),
et selon lequel la tige (3a, 3b) de cet organe de fermeture (3) est guidé, par l'intermédiaire d'un passage (A), pour sortir d'une partie associée (1a) du boîtier de soupape, et la tige (4a, 4b) de l'autre organe de fermeture (4) est guidée, par l'intermédiaire d'un autre passage (C) pour sortir d'une partie associée (1b) du boîtier de soupape,
caractérisé en ce que l'un des deux passages (A) ou (C) est également libéré sous l'effet de la course partielle de telle sorte que le courant du fluide de nettoyage (R) est dérivé par l'intermédiaire du passage libéré (A) ou (C) à partir de la partie (1a) ou (1b) du boîtier de soupape et nettoie ainsi ce passage (A) ou (C) et moins l'une des zones suivantes
- l'autre passage (C) ou (A),
- la cavité de fuite (6), et
- la surface de siège (2a) qui est devenue accessible.

2. Procédé selon la revendication 1, caractérisé en ce que le courant (R) du fluide de nettoyage, qui est dérivé à partir de la partie (1a) ou (1b) du boîtier de soupape, nettoie l'un des deux passages (A) ou (C) de la tige au niveau du point de dérivation et successivement, sans autre dérivation, selon une séquence quelconque, de préférence dans le sens de déplacement de haut en bas, au moins l'une des parties suivantes
- la surface de siège (2a) devenue accessible,
- la cavité de fuite (6), et
- l'autre passage (C)
ou au moins l'une des parties suivantes
- l'autre passage (A),
- la surface de siège (2a) devenue accessible, et
- la cavité de fuite (6).

3. Procédé selon la revendication 1, caractérisé en ce que le courant (A) du fluide de nettoyage se divise, à la suite du nettoyage de l'un des deux passages (A) ou (C) de la tige, au niveau du point d'embranchement en des courants partiels (Ri), qui nettoient les parties mentionnées de la soupape à double siège qui sont disposées côte-à-côte ou côte-à-côte et l'une derrière l'autre.

4. Procédé selon la revendication 3, caractérisé en ce que le courant (R) du fluide de nettoyage est subdivisé en deux courants partiels (R1, R2), dont l'un (R1) nettoie
- la surface de siège (2a) devenue accessible,
- la cavité de fuite (6),
et dont l'autre (R2) nettoie
- l'autre passage (C ou A).

5. Procédé selon l'une des revendications 1 à 4, dans lequel deux organes de fermeture (3,4) sont agencés à la manière de tiroirs,
caractérisé en ce que les organes de fermeture (3,4) sont déplacés selon des courses partielles (T11,T21) de sens opposés, le courant (R) du fluide de nettoyage étant dérivé au niveau du passage de tige de celui de l'organe de fermeture dont la course partielle est exécutée en sens opposé au déplacement d'ouverture (H) de la soupape.

6. Procédé selon l'une des revendications 1 à 4, dans lequel deux organes de fermeture (3,4) sont agencés en forme de tiroirs, l'un d'eux est entraîné indépendamment de l'autre et l'autre est entraîné d'une manière dépendante,
caractérisé en ce que les organes de fermeture (3,4) sont déplacés selon des courses partielles (T12,T22) de même sens, le courant (R) du fluide de nettoyage étant dérivé au niveau du passage de la tige de celui des organes de fermeture dont la course partielle est exécutée en sens opposé au déplacement d'ouverture (H) de la soupape et qui est entraîné d'une manière dépendante.

7. Procédé selon l'une des revendications 1 à 4, selon lequel un organe de fermeture (3,4) est agencé en forme de tiroir et un organe de fermeture (3,4) est réalisé sous la forme d'un disque d'appui, l'organe de fermeture agencé en forme de tiroir étant entraîné de manière indépendante, caractérisé en ce que l'organe de fermeture agencé en forme de tiroir est écarté du disque d'appui d'une distance égale à la course partielle, le disque d'appui restant sur sa surface de siège.

8. Procédé pour nettoyer une soupape à double siège, notamment une soupape à double siège qui procure une commutation avec une faible fuite ou sans fuite, équipée de deux organes de fermeture (3,4) agissant en série, pouvant être actionnés par l'intermédiaire de tiges (3a, 3b; 4a,4b) et enserrant entre eux une cavité de fuite (6),
procédé selon lequel au moins un organe de fermeture exécute une course partielle, qui rend une partie importante d'une surface de siège (2a), associée à cet organe de fermeture, accessible à un courant (R) d'un fluide de nettoyage, amené à partir de l'environnement, l'étanchéité restant conservée au niveau de la surface de siège (2a),
et selon lequel la tige (3a, 3b) de cet organe de fermeture (3) est guidé, par l'intermédiaire d'un passage (A), pour sortir d'une partie associée (1a) du boîtier de soupape, et la tige (4a, 4b) de l'autre organe de fermeture (4) est guidée, par l'intermédiaire d'un autre passage (C) pour sortir d'une partie associée (1b) du boîtier de soupape,
caractérisé en ce que le courant (R) du fluide de nettoyage est introduit par l'intermédiaire d'un point d'entrée (E) dans la soupape à double siège, où il nettoie celui des deux passages (A ou C) qui est situé du côté du boîtier de soupape où se trouve le point d'entrée (E) et au moins l'une des parties suivantes
- l'autre passage (C ou A),
- la cavité de fuite (6), et
- la surface de siège (2a) libérée ou rendue accessible.

9. Procédé selon la revendication 8, caractérisée en ce que le courant du fluide de nettoyage se subdivise, après le point d'entrée (E), au niveau du point de répartition (V), en des courants partiels (Ri), dont l'un (r) est étranglé, nettoie presque sans pression la garniture d'étanchéité de tige voisine et est envoyé ensuite vers l'environnement de la soupape, et un courant partiel (R) ou des courants partiels (R1,R2) sont ensuite traités, conformément à l'un des procédés caractérisés dans les revendications 2 à 4, à la place du courant de fluide de nettoyage obtenu au niveau du passage libéré (A ou C).

10. Procédé selon la revendication 8 ou 9, comportant deux organes de fermeture (3,4) réalisés en forme de tiroirs, caractérisé en ce que les organes de fermeture sont déplacés selon des courses partielles conformément à l'un des procédés caractérisé dans les revendications 5 ou 6.

11. Procédé selon la revendication 8 ou 9, dans lequel un organe de fermeture (3,4) est réalisé sous la forme d'un tiroir et un organe de fermeture (3,4) réalisé sous la forme d'un disque d'appui, l'organe de fermeture agencé en forme de tiroir étant entraîné d'une manière indépendante,
caractérisé en ce que l'organe de fermeture agencé en forme de tiroir est écarté du disque d'appui d'une distance égale à la course partielle, le disque d'appui restant sur sa surface de siège.

12. Dispositif de soupape pour la mise en oeuvre du procédé selon la revendication 1, 2 ou 5,
comportant des organes de fermeture (3,4), qui enserrent entre eux une cavité de fuite (6) et dont les tiges (3a,3b;4b) sont guidés d'un côté pour sortir du boîtier de soupape (1a,1b) et sont reliées à des dispositifs d'actionnement (D),
et dans lequel le premier organe de fermeture (3), tourné vers les dispositifs d'actionnement, est entraîné de façon indépendante du second organe de fermeture (4) par l'intermédiaire de la première tige (3a, 3b), qui traverse un passage (A) dans une partie associée (1a) du boîtier de soupape, et le second organe de fermeture est entraîné par une seconde tige (4b),
caractérisé en ce que le second organe de fermeture (4) est relié par l'intermédiaire d'un tube (4a) à la seconde tige (4b),
en ce que le tube (4a) entoure cette tige coaxialement et est guidée, par l'intermédiaire d'un autre passage (C), pour sortir de l'autre partie (1b) du boîtier de soupape
en ce que le passage (A) établit, par l'intermédiaire d'une fente annulaire (9) située entre la première tige (3a) et la seconde tige (4b), qui s'étend coaxialement dans la précédente, de l'autre organe de fermeture (4), une liaison avec la cavité de fuite (6) et, par l'intermédiaire de l'intérieur du tube (4a) et d'ouvertures (4f) ménagées dans la paroi du tube (4a), une liaison avec l'autre passage (C),
et en ce que lors d'une course partielle du premier organe de fermeture (3), dirigée en sens opposé au déplacement d'ouverture (H) de la soupape, le passage (A) est libéré et de ce fait, le courant du fluide de nettoyage est libéré.

13. Dispositif de soupape pour la mise en oeuvre du procédé selon la revendication 1 ou l'une des revendications 3 à 6,
comportant des organes de fermeture (3,4), qui enserrent entre eux une cavité de fuite (6) et dont les tiges (3a, 3b;4b) sont guidés d'un côté pour sortir du boîtier de soupape (1a,1b) et sont reliés à des dispositifs d'actionnement (D),
et dans lequel le premier organe de fermeture (3), tourné vers les dispositifs d'actionnement, est entraîné en fonction du second organe de fermeture (4) par l'intermédiaire de la première tige (3a, 3b), qui traverse un passage (A) dans une partie associée (1a) du boîtier de soupape, et le second organe de fermeture est entraîné par une seconde tige (4b),
caractérisé en ce que le second organe de fermeture (4) est relié à la seconde tige (4b) par l'intermédiaire d'un tube (4a), qui entoure celle-ci coaxialement et qui est guidé, par l'intermédiaire d'un autre passage (C), pour sortir de l'autre partie (1b) du boîtier de soupape,
en ce que, dans la seconde tige (4b) est prévu, dans la direction axiale, un perçage (4d), qui est relié d'une part au passage (A) et d'autre part à l'autre passage (C),
en ce que la voie de liaison entre le perçage (4d) et le passage (A) comporte un point de ramification (V), à partir duquel existe une autre liaison vers une fente annulaire (9) formée entre la première tige (3a) et la seconde tige (4b) qui est guidée coaxialement dans cette première tige,
en ce que la fente annulaire (9) établit une liaison avec la cavité de fuite (6)
et en ce que, lors d'une course partielle du premier organe de fermeture (3), dirigée en sens opposé au déplacement d'ouverture (H) de la soupape, le passage (A) ou, pour le second organe de fermeture (4), l'autre passage (C), est libéré et de ce fait le courant (R) du fluide de nettoyage, qui se divise, au niveau du point de ramification (V), en les courants partiels (R1,R2), est de ce fait libéré.

14. Dispositif de soupape selon la revendication 13, caractérisé en ce que la voie de liaison entre le passage (A) et le point de ramification (V) présente une première fente d'étranglement (15) lorsque la soupape est dans la position fermée ou dans la position de libération de l'autre passage (C),
et en ce que la voie de liaison entre l'autre passage (C) et le perçage (4d) présente une seconde fente d'étranglement (16) lorsque la soupape est dans la position fermée ou dans la position de libération du premier passage (A).

15. Dispositif de soupape selon l'une des revendications 12 à 14, caractérisé en ce que sur toute son étendue entre l'organe de fermeture (4) et son autre passage (C), le tube (4a) possède un diamètre accru égal approximativement au diamètre du siège de la soupape.

16. Dispositif de soupape selon l'une des revendications 12 à 15, caractérisé en ce que dans la zone de son passage (A) à travers la partie (1a) du boîtier de soupape, la première tige (3a, 3b) possède un diamètre accru égal au diamètre du siège de la soupape, de manière à former un piston de compensation de pression (3b).

17. Dispositif de soupape selon l'une des revendications 12 à 16, caractérisé en ce qu'une ouverture de sortie (17 ou 22) est ouverte ou fermée d'une manière télécommandée pour dériver la partie (R2) du courant du fluide de nettoyage dans la zone située au-dessus de la première garniture d'étanchéité de tige (5) ou au-dessous de la seconde garniture d'étanchéité de tige (7).

18. Dispositif de soupape selon l'une des revendications 12 à 17, caractérisé en ce que la libération des passages (A,C) est réalisée par un groupe de premiers évidements (3e) ménagés dans la première tige (3a) ou dans le piston de compensation de pression (3b) ou par un groupe de seconds évidements (4g) aménagés dans le tube (4a), chacun des groupes représentant des renfoncements séparés les uns des autres, qui sont orientés dans la direction de l'axe de la soupape ou obliquement par rapport à cet axe, et sont répartis sur la périphérie de la tige (3a) ou du piston de compensation de pression (3b) et/ou du tube (4a).

19. Dispositif de soupape selon l'une des revendications 12 à 18, comportant deux organes de fermeture (3,4) réalisés en forme de tiroirs, qui peuvent exécuter des courses partielles, leur étanchéité respective étant conservée dans la zone du siège,
caractérisé en ce que des courses partielles (T11,T21 ou T12, T22) des organes de fermeture (3,4) en des sens opposés ou dans le même sens peuvent être exécutées à l'intérieur d'une surface de siège associée (2a), dans le même dispositif de soupape,
la course partielle (T11) du premier organe de fermeture (3) étant prévue pour la libération du passage (A) de la première tige (3a;3b) dans la partie (1a) du boîtier de soupape et, la course partielle (T22), qui est d'une longueur approximativement identique et orientée dans le même sens, du second organe de fermeture (4) étant prévue pour la libération en alternative de l'autre passage (C) du tube (4a) dans la partie (1b) du boîtier de soupape,
et en ce que lors de courses partielles exécutées dans le même sens, la course partielle (T12) du premier organe de fermeture (3), qui est éventuellement soumis à l'action du produit, est dimensionnée de telle sorte que le passage (A) reste fermé.

20. Dispositif de soupape selon la revendication 19, caractérisé en ce que, par rapport à la position de repos des organes de fermeture (3,4) lorsque le dispositif de soupape est dans la position fermée, ces organes de fermeture sont disposés en étant décalés axialement en direction du second organe de fermeture (4) à l'intérieur de la surface d'appui (2a) de telle sorte que, pour des courses partielles (T11,T21) dirigées en des sens opposés, avec T11 > T21, ces courses peuvent être parcourues avec une faible distance de sécurité (b1,b2) par rapport à l'extrémité respective de la surface d'appui (2a).

21. Dispositif de soupape pour la mise en oeuvre du procédé selon l'une des revendications 8 à 11, et agencé selon l'une des revendications 12 à 20,
caractérisé en ce que dans la zone des passages (A et C) il est prévu respectivement un insert de structures identique (24)entre le boîtier et le piston de compensation de pression (3b) ou le tube (4a), cet insert formant d'une part la fente d'étranglement (15 ou 16) avec le piston de compensation de pression (3b) ou le tube (4a), et comprenant d'autre part un perçage d'évacuation (24a) servant à évacuer le courant partiel (r) dans l'environnement de la soupape à partir d'une chambre (24b) qui jouxte la garniture d'étanchéité (5 ou 7) des tiges et est formée partiellement par l'insert (24).
